# EUROPEAN PATENT APPLICATION

(11) **EP 4 842 107 A1**
(43) Date of publication of application: **18.11.2026**
(21) Application number: 24916916.0
(22) Date of filing: 24.12.2024
(51) Int. Cl.: H04W 72/0457, H04W 16/32, H04W 74/08, H04W 92/22

(54) **COMMUNICATION METHOD AND COMMUNICATION SYSTEM**

(30) Priority: 11.01.2024 JP 2024002251
(71) Applicant: Advanced Telecommunications Research Institute International, Soraku-gun Kyoto 619-0288 (JP)
(72) Inventor: MORI Keiichiro, Soraku-gun, Kyoto 619-0288 (JP); YAFUNE Norimasa, Soraku-gun, Kyoto 619-0288 (JP); SERIZAWA Kazunobu, Soraku-gun, Kyoto 619-0288 (JP); KURIHARA Takuya, Soraku-gun, Kyoto 619-0288 (JP); YANO Kazuto, Soraku-gun, Kyoto 619-0288 (JP); SAKANO Toshikazu, Soraku-gun, Kyoto 619-0288 (JP)
(74) Representative: Appelt, Christian W.
(86) International application number: PCT/JP2024/045566
(87) International publication number: WO 2025/150414

(57) **Abstract**

The communication method includes step A, when the master base station 1 judges that joint transmission with m slave base stations out of n slave base stations 2-1 to 2-n is possible, in which the master base station 1 calculates m data amounts of m transmission data to be allocated to the m slave base stations, respectively, step B in which the master base station 1 transmits a notification of transmission timing to the m slave base stations by wireless communication, step C in which the master base station transmits the m transmission data having m data amounts, respectively, to the m slave base stations using the backhaul, and step D in which the master base station 1 and the m slave base stations generate (m+1) transmission frames and transmit them to the wireless device 3.

## Description

### [Technical Field]

The present invention relates to a communication method and a communication system.

### [Background Art]

Toward the realization of Society 5.0, there is a demand for high-capacity, multiple access technologies for transmitting high-definition video, sensing information, and the like, in areas including education and medical care, as well as for advanced communication tools such as AR and VR, and for advanced mobility (Non-Patent Documents 1 to 3).

For example, if you try to transmit full-spec 8K video at 120 fps without compression to reduce latency, a transmission speed of higher than 100 Gbps is required.

For example, focusing on wireless LANs (Local Area Networks), when considering simultaneous provision of services to multiple users and widespread use, the maximum transmission speed of the IEEE 802.11 wireless LAN standard (176 Gbps for IEEE 802.11ay), which has been completed its standardization and published to date, is insufficient.

On the other hand, IEEE 802.15.3d, whose standardization was completed and published in 2017, utilizes the terahertz band, which allows for a wide frequency channel width, and enables one point-to-point communication at a maximum transmission speed of 100 Gbps. However, IEEE 802.15.3d does not support license-free multiple access by a large number of terminals, as supported in IEEE 802.11 wireless LAN.

Currently, at the IEEE 802.11 standardization meetings, discussions are underway on Joint Transmission, which transmits data over multiple links by cooperating multiple access points.

### [Citation List]

### [Non Patent Literature]

[NPL 1]
   Cabinet Office, "Society 5.0: A new society pioneered by science, technology and innovation" explanatory materials"
[NPL 2]
   Cabinet Office, "6th Science, Technology and Innovation Basic Plan," March 2021
[NPL 3]
   KDDI Corporation, "Beyond5G/6G White Paper Ver.2.0.1", October 2021

### [Summary of Invention]

### [Technical Problem]

To perform Joint Transmission, it is necessary to distribute the data to be transmitted in advance to each cooperating access point.

However, if the same channel is used to distribute transmission data to each cooperating access point as the channel used to transmit data from each access point to a wireless device, wireless resources become congested, resulting in a problem of low throughput.

In cellular CoMP (Coordination Multi-Point), data transmission time is fixed by time slot-based transmission and scheduling, but wireless LAN in IEEE 802.11 uses channel access based on CSMA/CA (Carrier Sense Multiple Access with Collision Avoidance) and the transmission time is variable, which causes the above problems.

Therefore, according to an embodiment of the present invention, a communication method capable of improving the throughput when transmitting data from an access point to a wireless device is provided.

Furthermore, according to the embodiment of the present invention, a communication system capable of improving the throughput when transmitting data from an access point to a wireless device is provided.

### [Solution to Problem]

### (Aspect 1)

According to an embodiment of the present invention, a communication method is a communication method in which a master base station and m (m is an integer satisfying 1≦m≦n) slave base stations out of n (n is an integer equal to or greater than 1) slave base stations cooperate to transmit transmission data D_trsm to a wireless device by wireless communication based on CSMA/CA using one channel,
a first step in which a master base station judges whether or not joint transmission is possible,
a second step in which the master base station calculates m data amounts of the m transmission data to be allocated to the m slave base stations, respectively, when the master base station judges in the first step that joint transmission is possible,
a third step in which the master base station transmits the notification of a timing for transmitting the transmission frame to the wireless device to the m slave base stations by wireless communication after the second step,
a fourth step in which the master base station transmits, after the second step, m pieces of transmission data having m amounts of data, respectively, to the m slave base stations, respectively, by using a backhaul,
a fifth step in which each of the master base station and the m slave base stations perform a transmission frame generation process which is a process of generating a transmission frame based on the amount of data after the second step,
a sixth step in which the master base station and the m slave base stations transmit (m+1) transmission frames to the wireless device by the joint transmission from when a transmission timing arrives, and
a seventh step in which the master base station receives, from the wireless device, a block Ack that executes an Ack in batch for confirming reception of the frames, after the sixth step.

### (Aspect 2)

In Aspect 1, the fourth and fifth steps are performed in parallel with the third step.

### (Aspect 3)

In Aspect 1, in the second step, the master base station executes, for all m slave base stations, calculating the amount of data to be allocated to the slave base station for which the amount of data is to be calculated, so that the amount of data is proportional to the wireless transmission speed of the transmission data at the slave base station for which the amount of data is to be calculated, and inversely proportional to the sum of the wireless transmission speed of the transmission data at the master base station and the m wireless transmission speeds at the m slave base stations, thereby calculating m amounts of data.

### (Aspect 4)

In Aspect 1, the master base station, in the third step, transmits padding having a length equal to the padding time and a notification of the transmission timing to the m slave base stations by wireless communication.

### (Aspect 5)

In Aspect 4, the padding time is the maximum padding time among the m padding times in the m slave base stations.

### (Aspect 6)

In Aspect 5, the master base station, in the third step, executes calculating the padding time of one slave base station using the transmission time when transmitting transmission data having a data amount allocated to one slave base station via backhaul to one slave base station, the processing time for generating a transmission frame at one slave base station, the transmission time when transmitting a notification of the transmission timing to one slave base station, and the SIFS time in CSMA/CA, for all m slave base stations, to calculate m padding times.

### (Aspect 7)

In Aspect 6, the master base station, in the third step, calculates the padding time for one slave base station by subtracting the transmission time of the notification of the transmission timing and the SIFS time from the sum of the transmission time and the processing time for generating the transmission frame.

### (Aspect 8)

In Aspect 1, the m slave base stations generate, in the transmission frame generation process of the fifth step, m transmission frames that are transmitted to the wireless device and are made up of physical layer frames based on the m transmission data transmitted by the master base station in the fourth step.

### (Aspect 9)

In Aspect 1, the communication method further includes an eighth step in which, when the master base station judges in the first step that joint transmission is not possible, instead of the second to sixth steps, only the master base station transmits a transmission frame including transmission data D_trsm to the wireless device by wireless communication.

### (Aspect 10)

In Aspect 1, when a state that a base station and a wireless device in a wireless LAN can transmit and receive data to each other is defined as "associated", a channel that the base station uses in common with all associated wireless devices is defined as a primary channel, a channel that the base station can use together with the primary channel to expand a bandwidth of communication with its associated wireless device is defined as a secondary channel, a channel consisting of "a common part of the 'combination of the primary channel and the secondary channel' or a part of the widest channel of the common part including the primary channel, under the condition that the primary channels of all base stations and wireless device are included" among the master base station, slave base station(s), and wireless device participating in the joint transmission JT is defined as a channel Ch_JT_CMM,
a first condition in which a primary channel of the wireless device is the same as a primary channel of the master base station, a second condition that a secondary channel of the wireless device is within a range of a secondary channel of the master base station, a third condition in which the primary channels of the m slave base stations are within a range of the primary channel or a secondary channel of the wireless device, and a fourth condition that, when the primary channel of the wireless device is different from the primary channels of the m slave base stations, the primary channel of the wireless device is within the range of the secondary channels of the m slave base stations are satisfied,
the master base station and the m slave base stations, in the sixth step, use "wireless communication employing CSMA/CA using the channel Ch_JT_CMM" instead of "wireless communication employing CSMA/CA using the one channel" and transmit the (m+1) transmission frames to the wireless device by the joint transmission when the transmission timing arrives.

### (Aspect 11)

According to an embodiment of the present invention, a communication system transmitting a transmission data D_trsm to a wireless device by using a joint transmission that a master base station and m (m is an integer satisfying 1≦m≦n) slave base stations among n (n is an integer equal to or greater than 1) slave base stations jointly transmit the transmission data D_trsm to the wireless device by wireless communication employing CSMA/CA using one channel,
the communication system comprising:
a master base station executing a calculation process calculating m data amounts of the m transmission data to be allocated to the m slave base stations, respectively, a first transmission process of transmitting, via the wireless communication, to the m slave base stations a notification of a transmission timing for notifying a timing for transmitting a transmission frame to the wireless device after the calculation process, a second transmission process of transmitting m pieces of transmission data having the m data amounts, respectively, to the m slave base stations by using a backhaul after the calculation process, and a transmission frame generation process for generating a transmission frame based on the transmission data of the master base station after the calculation process,
m slave base stations each executing a first reception process of receiving a notification of the transmission timing from the master base station and a second reception process of receiving the m transmission data from the master base station using the backhaul, and
a wireless device receiving the (m+1) transmission frames transmitted by the joint transmission between the master base station and the m slave base stations, and transmitting to the master base station a block Ack to collectively execute an Ack to confirm reception of the frames,
wherein each of the m slave base stations executes a transmission frame generation process which is a process of generating a transmission frame based on the transmission data received in the second reception process,
the master base station and the m slave base stations transmit the (m+1) transmission frames to the wireless device by the joint transmission when the transmission timing arrives, and
the master base station transmits the (m+1) transmission frames to the wireless device by the joint transmission with the m slave base stations, and then receives the block Ack from the wireless device.

### (Aspect 12)

In Aspect 11, the master base station executes the second transmission process and the process of generating the transmission frame in parallel with the first transmission process, and
each of the m slave base stations executes the generation process of the transmission frame in parallel with the first transmission process.

### (Aspect 13)

In Aspect 11, the master base station calculates, in the calculation process, an amount of data to be allocated to the slave base station for which the amount of data is to be calculated so that the amount of data is proportional to the wireless transmission speed of the transmission data at the slave base station for which the amount of data is to be calculated and inversely proportional to the sum of the wireless transmission rate of the transmission data at the master base station and the m wireless transmission speeds at the m slave base stations, for all of the m slave base stations, thereby calculating the m amounts of data.

### (Aspect 14)

In aspect 11, the master base station, in the first transmission process, transmits padding having a length equal to a padding time and the notification of transmission timing to the m slave base stations by wireless communication.

### (Aspect 15)

In aspect 14, the padding time is the maximum padding time among the m padding times of the m slave base stations.

### (Aspect 16)

In aspect 15, the master base station, in the first transmission process, calculates the m pieces of padding times by executing for all of the m slave base stations calculating the padding time of the one slave base station by using a transmission time when transmitting transmission data having a data amount allocated to one of the slave base stations to the one of the slave base stations by a backhaul, the generating process time of a transmission frame in the one slave base station, a transmission time when the notification of the transmission timing is transmitted to the one slave base station and SIFS time in CSMA/CA.

### (Aspect 17)

In aspect 16, the master base station, in the first transmission process, calculates a padding time for the one slave base station by subtracting the transmission time of the notification of the transmission timing and the SIFS time from an addition result of the transmission time and the generation processing time of the transmission frame.

### (Aspect 18)

In aspect 11, the m slave base stations generate, in the transmission frame generation process, m transmission frames to be transmitted to the wireless device, the m transmission frames being made up of physical layer frames, based on each of the m pieces of transmission data transmitted by the master base station in the second transmission process.

### (Aspect 19)

In aspect 11, when the master base station judges that the joint transmission is impossible, only the master base station transmits a transmission frame including the transmission data D_trsm to the wireless device by the wireless communication, in replace of the first transmission process, the calculation process, the second transmission process, the generation process of transmission frame and transmitting the (m+1) transmission frames by the joint transmission with the m slave base stations to the wireless device.

### (Aspect 20)

In aspect 11, a state where a base station and a wireless device in a wireless LAN can transmit and receive data to each other is defined as "associated", a channel that the base station uses in common with all associated wireless devices is defined as a primary channel, a channel that the base station can use together with the primary channel to expand a bandwidth of communication with its associated wireless device is defined as a secondary channel, among the master base station, slave base station(s) and wireless device participating in the joint transmission JT, "under the condition that the primary channels of all base stations and wireless device are included, and when a channel consisting of a common part of "combination of the primary channel and the secondary channel" or a part of the widest channel of the common part including a primary channel is defined as a channel Ch_JT_CMM,
satisfy a first condition in which a primary channel of the wireless device is the same as a primary channel of the master base station, a second condition that a secondary channel of the wireless device is within a range of a secondary channel of the master base station, a third condition that the primary channels of the m slave base stations are within a range of a primary channel or a secondary channel of the wireless device, and a fourth condition, when the primary channel of the wireless device is different from the primary channels of the m slave base stations, the primary channel of the wireless device is within the range of the secondary channels of the m slave base stations,
the master base station and the m slave base stations transmit the (m+1) transmission frames to the wireless device by the joint transmission at the transmission timing by using "wireless communication employing CSMA/CA using the channel Ch_JT_CMM" instead of "wireless communication employing CSMA/CA using the one channel".

### [Advantageous Effects of Invention]

It is possible to improve throughput by utilizing effectively wireless resources.

### [Brief Description of Drawing]

[FIG. 1]

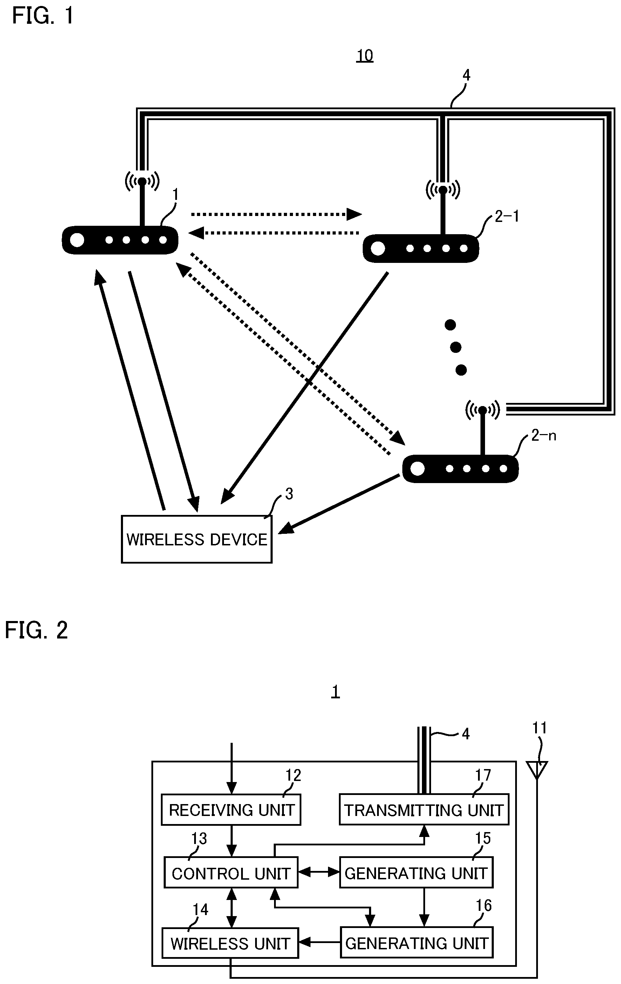

   FIG. 1 is a schematic diagram of a communication system according to embodiment 1 of the present invention.
[FIG. 2]
   FIG. 2 is a schematic diagram of the master base station 1 shown in FIG. 1.
[FIG. 3]

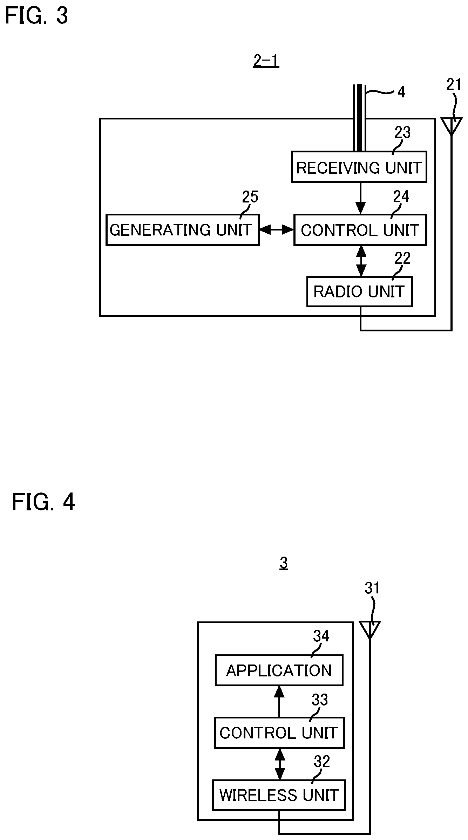

   FIG. 3 is a schematic diagram of the slave base station 2-1 shown in FIG. 1.
[FIG. 4]
   FIG. 4 is a schematic diagram of the wireless device 3 shown in FIG. 1.
[FIG. 5]

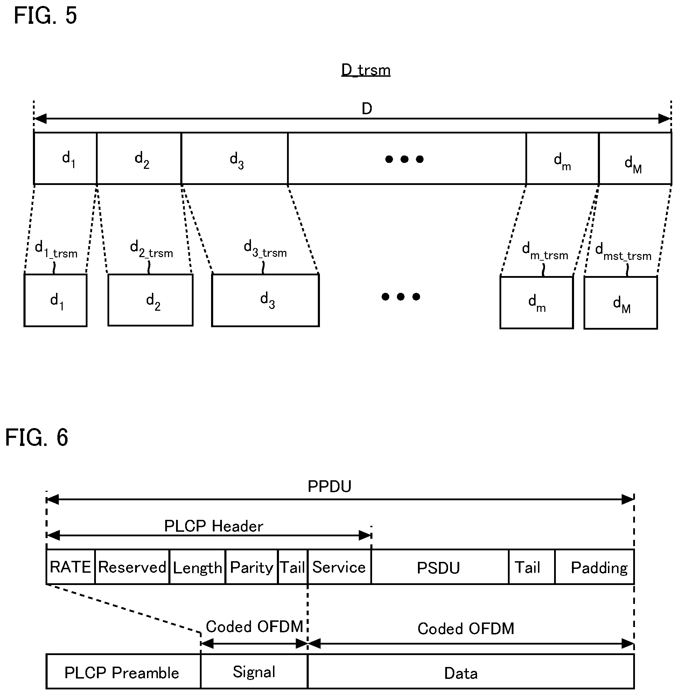

   FIG. 5 is a conceptual diagram for explaining a method of generating transmission data in the master base station 1 and m slave base stations.
[FIG. 6]
   FIG. 6 is a conceptual diagram showing the format of a transmission frame.
[FIG. 7]

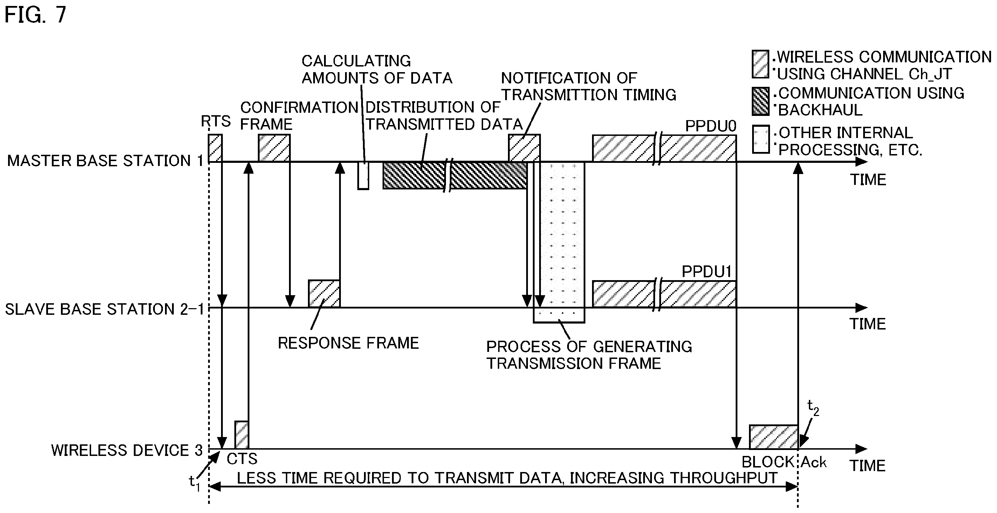

   FIG. 7 is a schematic diagram showing frame processing in the communication system 10 shown in FIG. 1.
[FIG. 8]

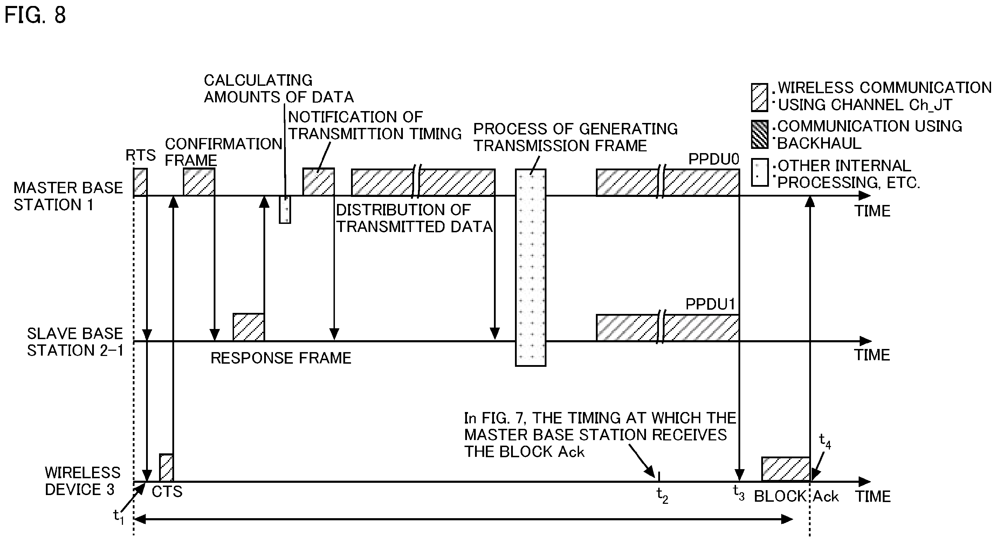

   FIG. 8 is a schematic diagram showing conventional frame processing.
[FIG. 9]

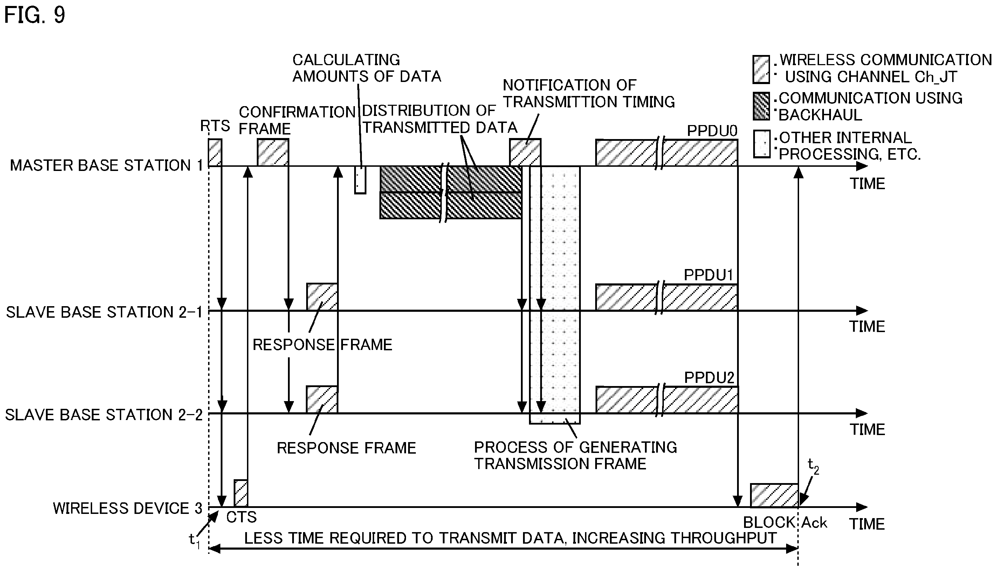

   FIG. 9 is another schematic diagram illustrating frame processing in the communication system 10 shown in FIG. 1.
[FIG. 10]

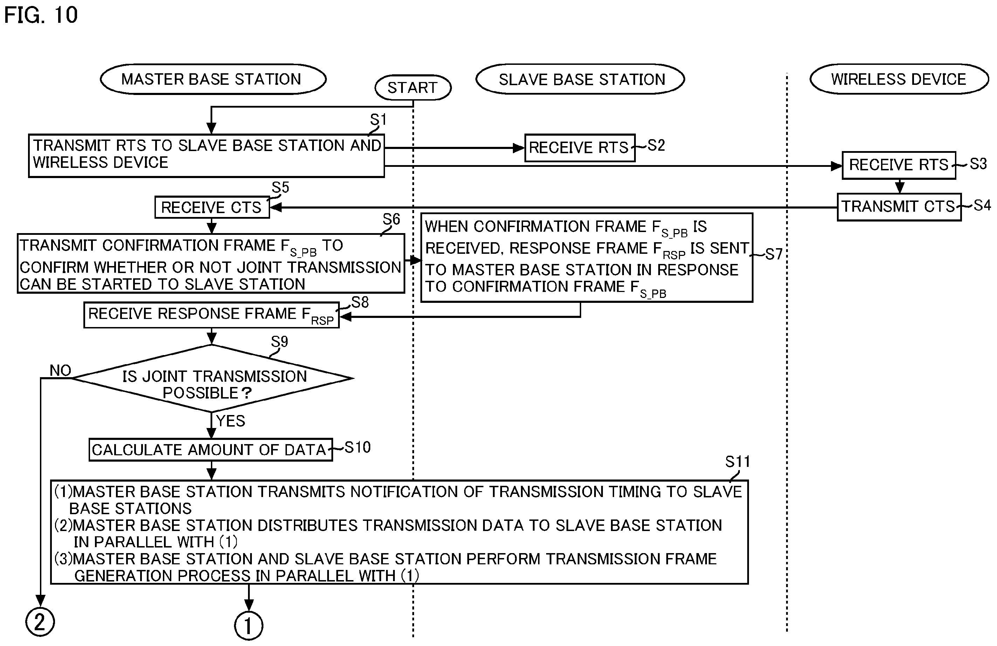

   FIG. 10 is a first flowchart for explaining the operation of the communication system 10 shown in FIG. 1.
[FIG. 11]

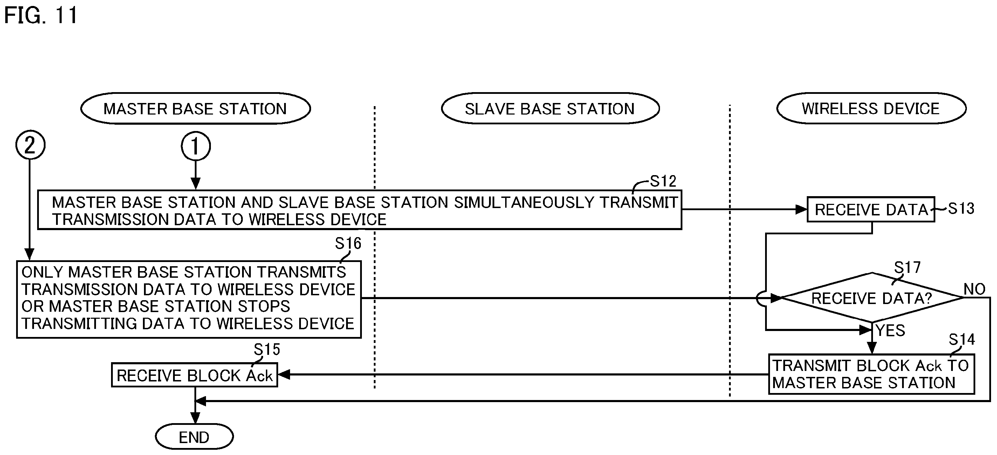

   FIG. 11 is a second flowchart for explaining the operation of the communication system 10 shown in FIG. 1.
[FIG. 12]

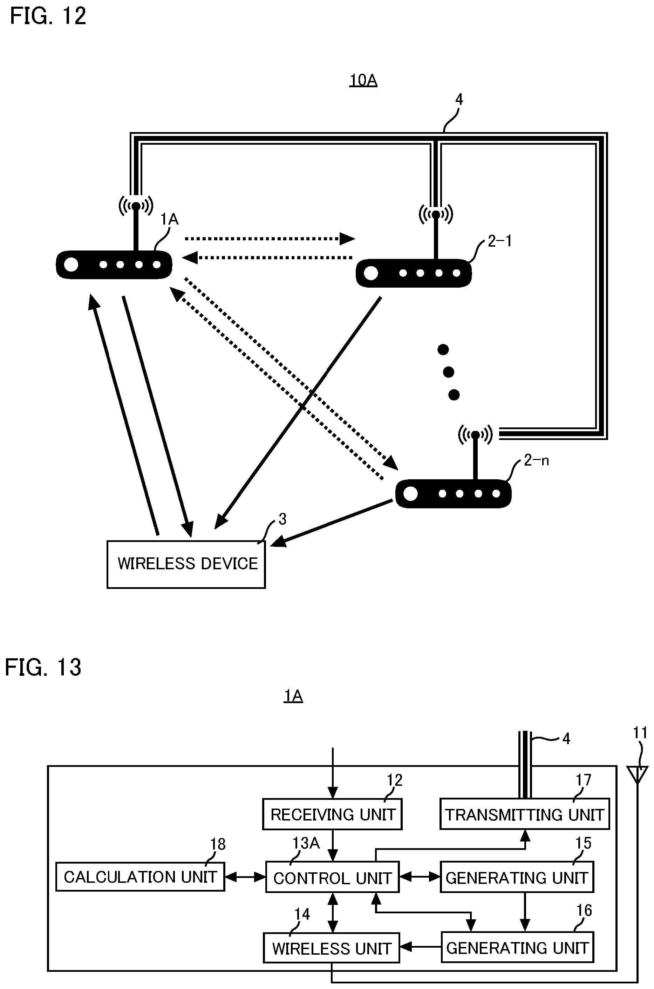

   FIG. 12 is a schematic diagram of a communication system according to the second embodiment.
[FIG. 13]
   FIG. 13 is a schematic diagram of the master base station 1A shown in FIG. 12.
[FIG. 14]

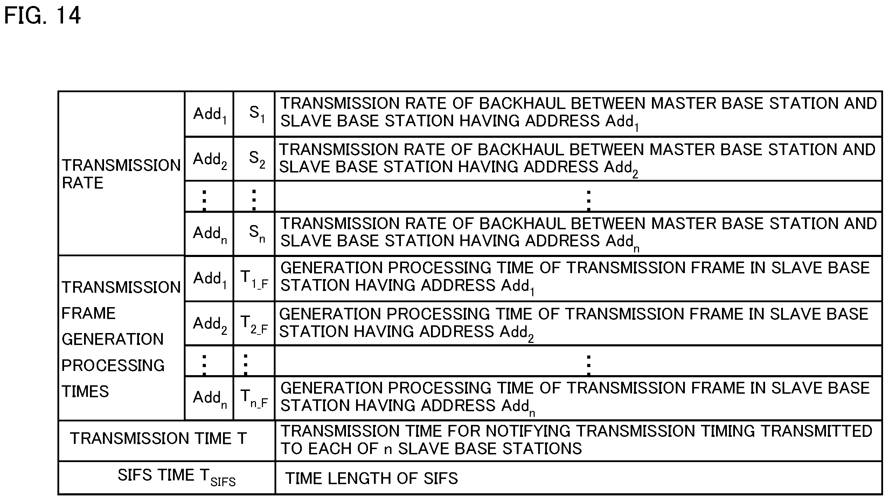

   FIG. 14 is a schematic diagram showing information previously held by the control unit 13A.
[FIG. 15]

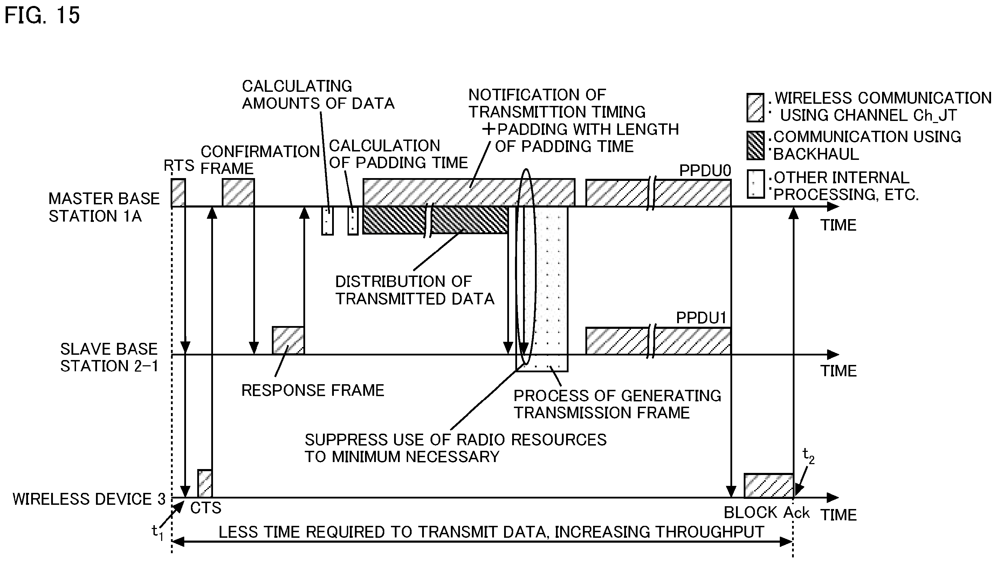

   FIG. 15 is a schematic diagram showing frame processing in the communication system 10A shown in FIG. 12.
[FIG. 16]

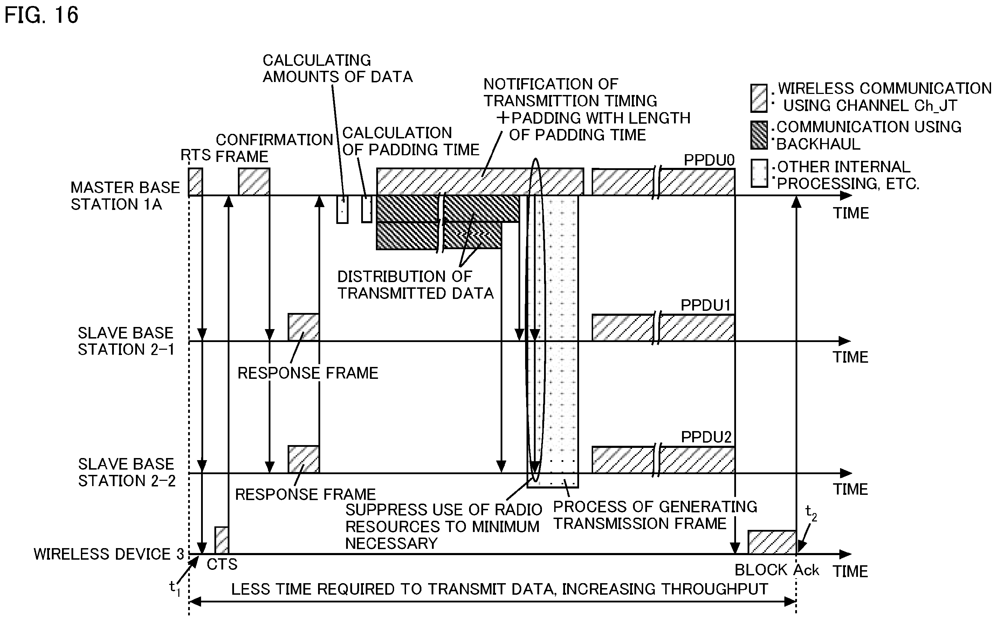

   FIG. 16 is another schematic diagram showing frame processing in the communication system 10A shown in FIG. 12.
[FIG. 17]

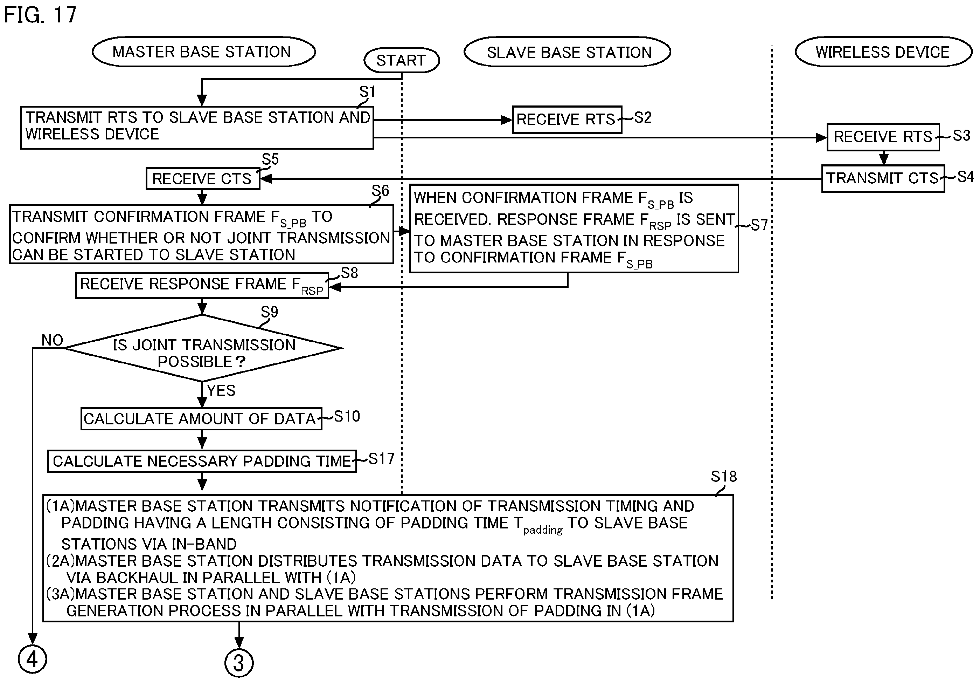

   FIG. 17 is a first flowchart for explaining the operation of the communication system 10A shown in FIG. 12.
[FIG. 18]

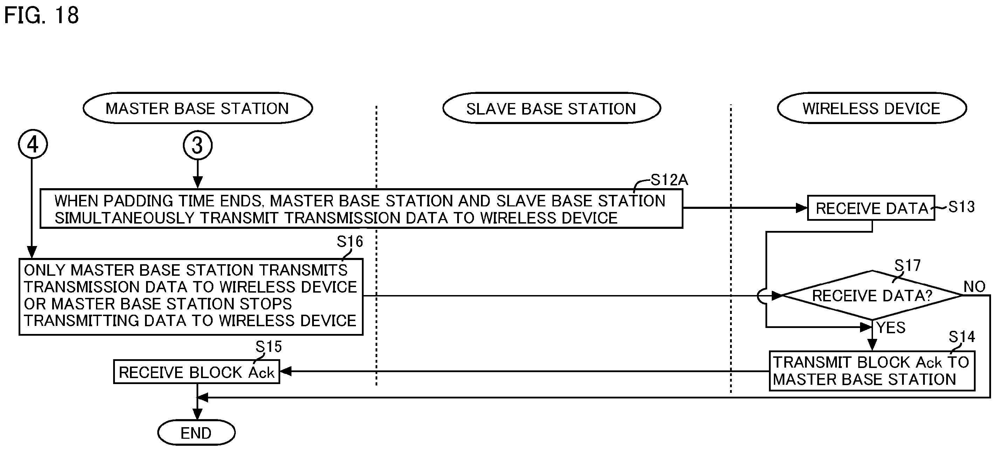

   FIG. 18 is a second flowchart for explaining the operation of the communication system 10A shown in FIG. 12.
[FIG. 19]

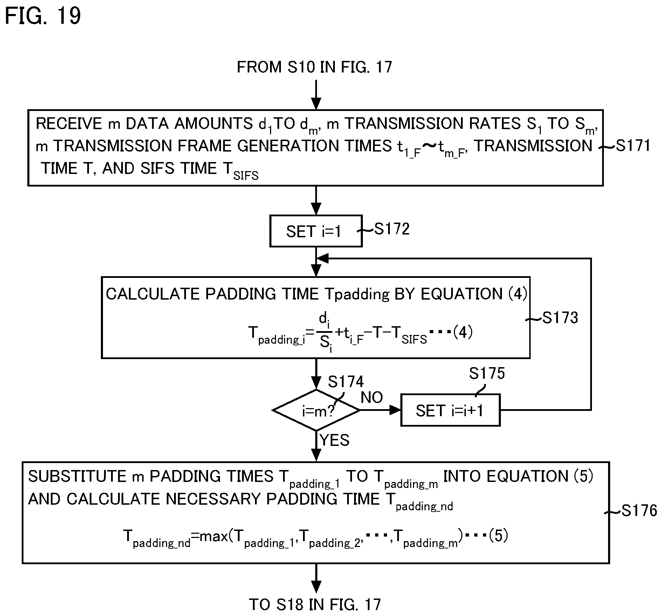

   FIG. 19 is a flowchart for explaining the detailed operation of step S17 in FIG. 17.
[FIG. 20]

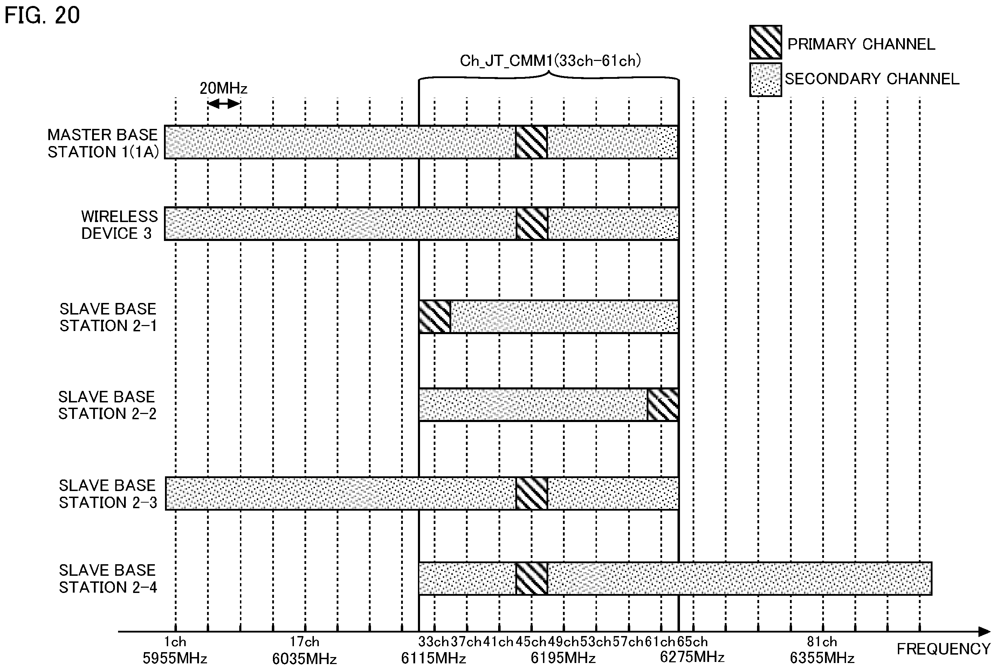

   FIG. 20 is a diagram showing an example of the configuration of the channel
   Ch_JT_CMM.
[FIG. 21]

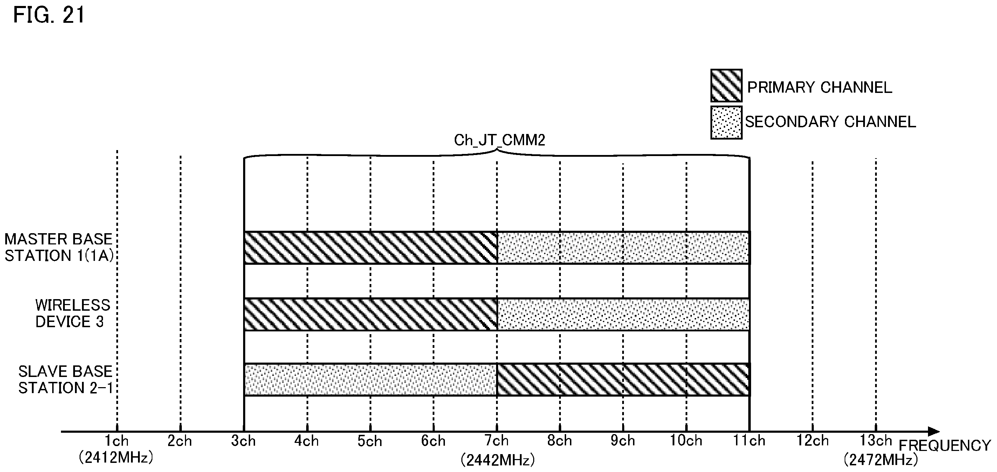

   FIG. 21 is a diagram showing another example of the configuration of the channel Ch_JT_CMM.
[FIG. 22]

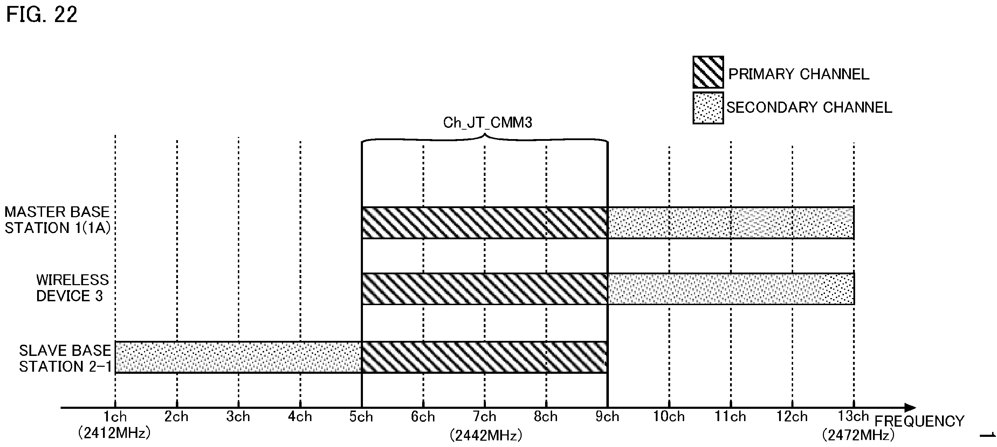

   FIG. 22 is a diagram showing yet another example of the configuration of the channel Ch_JT_CMM.
[FIG. 23]

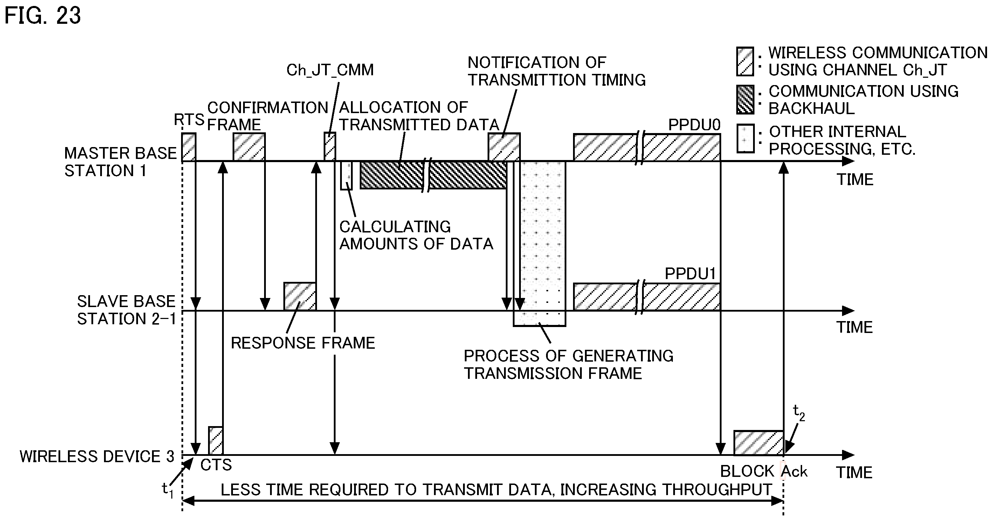

   FIG. 23 is a schematic diagram showing frame processing when using channel Ch_JT_CMM.
[FIG. 24]

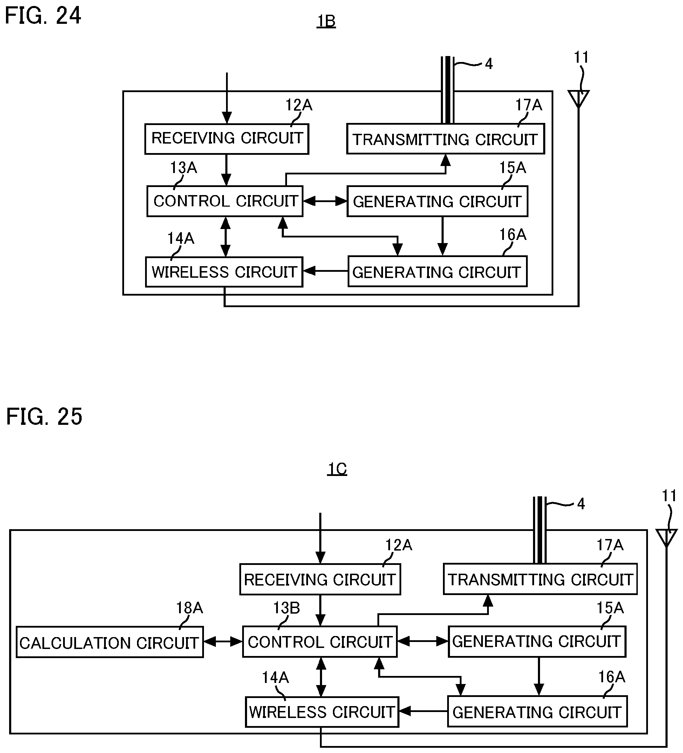

   FIG. 24 is another schematic diagram of the master base station 1 shown in FIG. 2.
[FIG. 25]
   FIG. 25 is another schematic diagram of the master base station 1A shown in FIG. 13.
[FIG. 26]

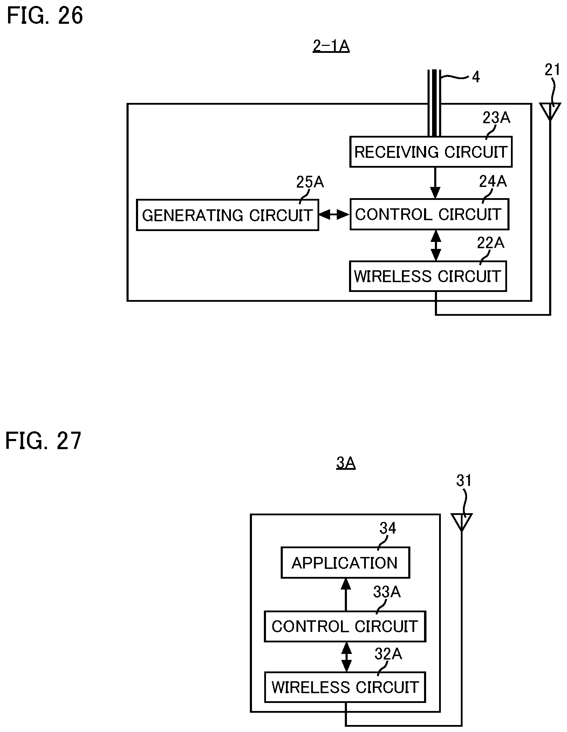

   FIG. 26 is another schematic diagram of the slave base station 2-1 shown in FIG. 3.
[FIG. 27]
   FIG. 27 is another schematic diagram of the wireless device 3 shown in FIG. 4.

### [Description of Embodiments]

Embodiments of the present invention will be described in detail in conjunction with the accompanying drawings. Note that the same or corresponding portions in the drawings are denoted by the same reference numerals and their descriptions will not be repeated.

### [First Embodiment]

FIG. 1 is a schematic diagram of a communication system according to embodiment 1 of the present invention. With referring to FIG. 1, a communication system 10 according to a first embodiment of the present invention includes a master base station 1, n (n is an integer of 1 or more) slave base stations 2-1 to 2-n, and a wireless device 3.

In FIG. 1, solid arrows represent transmission and reception of data via wireless communication and notification of transmission results via wireless communication, and dotted arrows represent transmission and reception of control information via wireless communication.

A master base station 1, n slave base stations 2-1 to 2-n, and a wireless device 3 are arranged in a wireless communication space.

The master base station 1 is connected to n slave base stations 2 - 1 to 2 - n via a backhaul 4.

The master base station 1 and the n slave base stations 2-1 to 2-n are located at different positions from one another, and the wireless device 3 is located within the communication range of wireless communication by the master base station 1 and each of the n slave base stations 2-1 to 2-n.

The master base station 1, n slave base stations 2-1 to 2-n, and wireless device 3 perform wireless communication employing CSMA/CA using a channel Ch_JT consisting of one channel.

The channel Ch_JT is, for example, the primary channel (= a channel used in common between the base station and all wireless devices associated with the base station) of the master base station 1. And, "being associated" means that the base station and the wireless devices in the wireless LAN can transmit and receive data to each other.

In this embodiment of the present invention, "joint transmission JT" refers to the master base station 1 and m (m is an integer satisfying 1≦m≦n) slave base stations out of n slave base stations 2-1 to 2-n jointly transmitting transmission data D_trsm to a wireless device 3 via wireless communication employing CSMA/CA using channel Ch_JT.

The master base station 1 receives the transmission data D_trsm from the transmission source, and then transmits an RTS (Request To Send) to the n slave base stations 2-1 to 2-n and the wireless device 3 by wireless communication using the channel Ch_JT.

Thereafter, when the master base station 1 receives a CTS (Clear To Send) from the wireless device 3 via wireless communication using channel Ch_JT, the master base station 1 transmits a confirmation frame F_{S_PB} confirming whether or not the joint transmission JT can be started to the n slave base stations 2-1 to 2-n via wireless communication using channel Ch_JT.

Then, the master base station 1 receives from the n slave base stations 2-1 to 2-n, via wireless communication using the channel Ch_JT, response frames F_{RSP} indicating whether or not joint transmission JT is possible in response to the confirmation frame F_{S_PB}.

Here, the response frame F_{RSP} includes "JT_OK" indicating that joint transmission JT is possible, or "JT_NG" indicating that joint transmission JT is not possible.

When the master base station 1 receives the n response frames F_{RSP} from the n slave base stations 2-1 to 2-n, the master base station 1 judges whether or not joint transmission JT is possible based on the received n response frames F_{RSP}.

More specifically, the master base station 1 judges that joint transmission JT is possible when m response frames F_{RSP} among n response frames F_{RSP} include "JT_OK". That is, the master base station 1 judges that joint transmission JT with m slave base stations among n slave base stations 2-1 to 2-n is possible.

On the other hand, when all of the n response frames F_{RSP} include "JT_NG", the master base station 1 judges that joint transmission JT is not possible.

Incidentally, that m response frames F_{RSP} out of n response frames F_{RSP} include "JT_OK" corresponds that at least one response frame F_{RSP} out of the n response frames FRSP include "JT_OK".

When the master base station 1 judged that joint transmission JT is possible, the master base station 1 calculates the data amounts d₁ to dₘ to be distributed to the m slave base stations by a method to be described later.

Then, the master base station 1 executes the following steps (1) to (3).
(1) The master base station 1 transmits a notification of the transmission timing to m slave base stations by wireless communication using the channel Ch_JT.
(2) In parallel with (1), the master base station 1 distributes the transmission data to the slave base stations via the backhaul 4 based on the data amount (= the calculated data amounts d₁ to dₘ).
(3) The master base station 1 and the slave base station perform a transmission frame generation process in parallel with (1).

The transmission timing is the timing at which a transmission frame is transmitted to the wireless device 3, and the notification of the transmission timing is notifying the timing when transmits a transmission frame to the wireless device 3.

When the above steps (1) to (3) have been executed, the master base station 1 and the m slave base stations simultaneously transmit transmission frames to the wireless device 3 by wireless communication using the channel Ch_JT.

Thereafter, the master base station 1 receives, from the wireless device 3, a block Ack performing, by all in one, Ack confirming the reception of a frame.

On the other hand, when the master base station 1 judges that the joint transmission JT is not possible, the master base station 1 executes the following (A) or (B).
(A) The master base station 1 transmits ,by only the master base station 1, a transmission frame F_trsm including transmission data D_trsm to the wireless device 3 by wireless communication using the channel Ch_JT.
(B) The master base station 1 does not transmit the transmission frame F_trsm including the transmission data D_trsm to the wireless device 3.

The n slave base stations 2-1 to 2-n receive from the master base station 1 the RTS that the master base station 1 transmitted by wireless communication using the channel Ch_JT.

Furthermore, the n slave base stations 2-1 to 2-n receive the confirmation frame F_{S_PB} transmitted by the master base station 1 through wireless communication using the channel Ch_JT.

Then, in response to receiving the confirmation frame F_{S_PB}, each of the n slave base stations 2-1 to 2-n judges whether or not joint transmission JT with the master base station 1 is possible.

When joint transmission JT with the master base station 1 is possible, each of the n slave base stations 2-1 to 2-n transmits a response frame F_{RSP} including "JT_OK" to the master base station 1 by wireless communication using the channel Ch_JT.

On the other hand, when the joint transmission JT with the master base station 1 is not possible, each of the n slave base stations 2-1 to 2-n transmits a response frame F_{RSP} including "JT_NG" to the master base station 1 by wireless communication using the channel Ch_JT.

However, when each of the n slave base stations 2-1 to 2-n cannot transmit the response frame F_{RSP} (for example, when communicating with a wireless device other than the master base station 1), each of the n slave base stations 2-1 to 2-n may be configured not to transmit the response frame F_{RSP} to the master base station 1. In this case, the master base station 1 judges that joint transmission JT is not possible for the slave base stations from which the response frame F_{RSP} was not received.

The m slave base stations that have transmitted a response frame F_{RSP} including "JT_OK" to the master base station 1 calculate the amounts d₁ to dₘ of data that the master base station 1 will allocate to the m slave base stations, and then execute the following steps (4) to (6).

(4) Each of the m slave base stations receives a notification of the transmission timing from the master base station 1 by wireless communication using the channel Ch_JT.

(5) Each of the m slave base stations execute receiving transmission data from the master base station 1 via the backhaul 4 in parallel with (4).

(6) Each of the m slave base stations performs a transmission frame generation process in parallel with (4).

Here, (4) is executed in response to the above-mentioned "(1) The master base station 1 transmits a notification of the transmission timing to m slave base stations by wireless communication using the channel Ch_JT." In addition, (5) is executed in response to the above-mentioned "(2) The master base station 1 distributes the transmission data to the slave base stations via the backhaul 4 based on the amount of data (= the calculated amount of data d₁ to dₘ) in parallel with (1)." Furthermore, (6) is executed in response to the above-mentioned "(3) The master base station 1 and the m slave base stations perform the transmission frame generation process in parallel with (1)."

Thereafter, each of the m slave base stations transmits a transmission frame to the wireless device 3 simultaneously with the master base station 1 through wireless communication using the channel Ch_JT.

The wireless device 3 receives the RTS from the master base station 1 through wireless communication using the channel Ch_JT. Then, the wireless device 3 transmits a CTS to the master base station 1 by wireless communication using the channel Ch_JT.

Thereafter, when joint transmission JT is possible, the wireless device 3 receives (m+1) transmission frames from the master base station 1 and the m slave base stations by wireless communication using the channel Ch_JT.

Then, the wireless device 3 transmits the block Ack to the master base station 1 by wireless communication using the channel Ch_JT.

On the other hand, when joint transmission JT is not possible, the wireless device 3 receives a transmission frame F_trsm including transmission data D_trsm only from the master base station 1 by wireless communication using the channel Ch_JT.

Then, the wireless device 3 transmits the block Ack to the master base station 1 by wireless communication using the channel Ch_JT.

It should be noted that the wireless device 3 may not receive the transmission frame F_trsm including the transmission data D_trsm only from the master base station 1 when joint transmission JT is not possible.

FIG. 2 is a schematic diagram of the master base station 1 shown in FIG. 1. Referring to FIG. 2, the master base station 1 includes an antenna 11, a receiving unit 12, a control unit 13, a wireless unit 14, generating units 15 and 16, and a transmitting unit 17.

The receiving unit 12 receives the transmission data D_trsm addressed to the wireless device 3 via the network, and outputs the received transmission data D_trsm to the control unit 13.

When the control unit 13 receives the transmission data D_trsm from the receiving unit 12, the control unit 13 outputs an RTS to the wireless unit 14 and controls the wireless unit 14 to transmit the RTS to the n slave base stations 2-1 to 2-n and the wireless device 3 by wireless communication using the channel Ch_JT.

Thereafter, when the control unit 13 receives the CTS from the wireless unit 14, the control unit 13 generates a confirmation frame F_{S_PB}. Then, the control unit 13 outputs the confirmation frame F_{S_PB} to the wireless unit 14 and controls the wireless unit 14 to transmit the confirmation frame F_{S_PB} to the n slave base stations 2-1 to 2-n by wireless communication using the channel Ch_JT.

After outputting the confirmation frame F_{S_PB} to the wireless unit 14, the control unit 13 receives n response frames F_{RSP} from the wireless unit 14. Then, the control unit 13 judges whether or not the joint transmission JT is possible based on the n response frames F_{RSP}.

In this case, the control unit 13 judges that the joint transmission JT is possible when m response frames F_{RSP} out of n response frames F_{RSP} include "JT_OK". That is, the control unit 13 judges that joint transmission JT with m slave base stations out of n slave base stations (at least one slave base station among the n slave base stations 2-1 to 2-n) is possible.

On the other hand, when all of the n response frames F_{RSP} contain "JT_NG", the control unit 13 judges that joint transmission JT is not possible.

The control unit 13 previously holds a correspondence table TBL in which the n wireless transmission rates r₁ to rₙ at the n slave base stations 2-1 to 2-n correspond to the n addresses Add₁ to Addₙ of the n slave base stations 2-1 to 2-n, respectively, and also has a built-in timer.

Then, the control unit 13 refers to the correspondence table TBL and detects m wireless transmission rates r₁ to rₘ at the m slave base stations based on m addresses Add₁ to Addₘ of the m slave base stations capable of joint transmission JT with the master base station 1.

Thereafter, the control unit 13 outputs the transmission data D_trsm and the m wireless transmission rates r₁ to rₘ to the generating unit 15, calculates a data amount d_{mst_trsm} to be allocated to the master base station 1 and data amounts d₁ to dₘ to be allocated to the m slave base stations based on the data amount D of the transmission data D_trsm and the m wireless transmission rates r₁ to rₘ, generates transmission data d_{mst_trsm} of the master base station 1 having a data amount dₘₛₜ, and m pieces of transmission data d_{1_trsm} to d_{m_trsm} of m slave base stations having data amounts d₁ to dₘ, respectively, controls the generating unit 15 so as to output the transmission data d_{mst_trsm} of the master base station 1 to the generating unit 16 and to output m pieces of transmission data d_{1_trsm} to d_{m_trsm} of the m slave base stations to the control unit 13.

After the control unit 13 outputs the transmission data D_trsm and m wireless transmission rates r₁ to rₘ to the generating unit 15, when the control unit 13 receives m pieces of transmission data d_{1_trsm} to d_{m_trsm} of the m slave base stations from the generating unit 15, the control unit 13 generates a notification of the transmission timing.

When the control unit 13 generates the notification of the transmission timing, the control unit 13 outputs the generated notification of the transmission timing to the wireless unit 14 and controls the wireless unit 14 to transmit the notification of the transmission timing to m slave base stations via wireless communication using the channel Ch_JT.

In addition, the control unit 13 outputs m pieces of transmission data d_{1_trsm} to d_{m_trsm} to the transmission unit 17, and controls the transmission unit 17 to transmit the m pieces of transmission data d_{1_trsm} to d_{m_trsm} to the m slave base stations via the backhaul 4, respectively.

Furthermore, the control unit 13 generates a transmission frame F_{mst_trsm} for the master base station 1 based on the transmission data d_{mst_trsm} of the master base station 1 received from the generating unit 15, and controls the generating unit 16 to output the generated transmission frame F_{mst_trsm} to the wireless unit 14.

Thereafter, the control unit 13 refers to the timer and when the transmission timing arrives, the control unit 13 outputs to the wireless unit 14 an instruction signal S_{ISTR} to instruct to transmit the transmission frame F_{mst_trsm} of the master base station 1 to the wireless device 3, and controls the wireless unit 14 so as to transmit the transmission frame F_{mst_trsm} of the master base station 1 received from the generating unit 16 to the wireless device 3 by wireless communication using the channel Ch_JT.

After outputting an indication signal S_{ISTR} to the wireless unit 14, the control unit 13 receives a block Ack from the wireless unit 14 and detects that the wireless device 3 has received the transmission frames F_{mst_trsm}, F_{1_trsm} to F_{m_trsm} through joint transmission JT between the master base station 1 and m slave base stations.

On the other hand, when the control unit 13 judged that joint transmission JT between the master base station 1 and the m slave base stations is not possible, the control unit 13 outputs the transmission data D_trsm to the generating unit 16, generates a transmission frame F_trsm including transmission data D_trsm, and controls the generating unit 16 so as to output the generated transmission frame F_trsm to the wireless unit 14.

Then, the control unit 13 receives the Block Ack from the wireless unit 14 and detects that the wireless device 3 has received the transmission frame F_trsm transmitted only by the master base station 1.

When the control unit 13 judges that joint transmission JT between the master base station 1 and the m slave base stations is not possible and does not transmit the transmission data D_trsm to the wireless device 3, the control unit 13 discards the transmission data D_trsm.

When the wireless unit 14 receives the RTS from the control unit 13, the wireless unit 14 transmits the RTS to the n slave base stations 2-1 to 2-n and the wireless device 3 via the antenna 11 by wireless communication using the channel Ch_JT.

In addition, the wireless unit 14 receives a CTS from the wireless device 3 via the antenna 11 by wireless communication using the channel Ch_JT, and outputs the received CTS to the control unit 13.

Thereafter, when the wireless unit 14 receives the confirmation frame F_{S_PB} from the control unit 13, the wireless unit 14 transmits the confirmation frame F_{S_PB} via the antenna 11 to the n slave base stations 2-1 to 2-n by wireless communication using the channel Ch_JT.

Then, the wireless unit 14 receives n response frames F_{RSP} from the n slave base stations 2-1 to 2-n, respectively, by wireless communication using the channel Ch_JT via the antenna 11, and outputs the received n response frames F_{RSP} to the control unit 13.

Furthermore, when the wireless unit 14 receives the notification of the transmission timing from the control unit 13, the wireless unit 14 transmits the notification of the transmission timing to the m slave base stations via the antenna 11 by wireless communication using the channel Ch_JT.

Thereafter, when the wireless unit 14 receives an instruction signal S_{ISTR} from the control unit 13 and the transmission frame F_{mst_trsm} from the generating unit 16, the wireless unit 14 transmits the transmission frame F_{mst_trsm} to the wireless device 3 via the antenna 11 by wireless communication using the channel Ch_JT in response to the instruction signal S_{ISTR}.

After the transmission frame F_{mst_trsm} was transmitted, the wireless unit 14 receives the Block Ack from the wireless device 3 by wireless communication using the channel Ch_JT, and outputs the received Block Ack to the control unit 13.

Furthermore, the wireless unit 14 receives the transmission frame F_trsm from the generating unit 16 when the joint transmission JT is not possible and only the master base station 1 transmits transmission data D_trsm to the wireless device 3.

Then, the wireless unit 14 transmits the transmission frame F_trsm to the wireless device 3 via the antenna 11 by wireless communication using the channel Ch_JT.

The generating unit 15 receives from the control unit 13 the data amount D of the transmission data D_trsm, the wireless transmission rate r at the master base station 1, and the m wireless transmission rates r₁ to rₘ at the m slave base stations.

Then, the generating unit 15 calculates the data amount dᵢ by substituting the data amount D of the transmission data Dtrsm, the wireless transmission rate r at the master base station 1, and the m wireless transmission rates r₁ to rₘ at the m slave base stations into equation (1) for all of i = 1 to m, and calculates m data amounts d₁ to dₘ.
[Math. 1] $\left.\begin{matrix}{d}_{i} = \frac{{r}_{i}}{R} D , i ∈ M \left(1A\right) \\ R = r + {\sum }_{i ϵ M} {r}_{i} \left(1B\right)\end{matrix}\right\}$ (1)

In formula (1A), dᵢ is the amount of data allocated to the i-th slave base station, rᵢ is the wireless transmission rate at the i-th slave base station (= the wireless transmission rate of the transmission data at the slave base station for which the amount of data is to be calculated), R is represented by formula (1B), D is the total amount of data to be transmitted to the wireless device 3. In addition, in formula (1B), r is the wireless transmission rate of the transmission data at the master base station 1, and rᵢ is the wireless transmission rate of the transmission data at the slave base station i included in the set M and capable of joint transmission JT. As a result, R is the sum of the radio transmission rate at the master base station 1 and the radio transmission rates at all slave base stations capable of joint transmission JT.

Furthermore, in equation (1), when all of the n slave base stations 2-1 to 2-n are capable of performing joint transmission JT, the set M in equation (1) is M={i∈N|1≦i≦n}.

On the other hand, in equation (1), if m slave base stations out of n slave base stations 2-1 to 2-n are capable of performing joint transmission JT, the set M in equation (1) is M = {i∈N|1≦i≦m}.

Then, according to equation (1), the generating unit 15 calculates the data amount dᵢ of the slave base station for which the data amount dᵢ is to be calculated so that the data amount dᵢ is proportional to the wireless transmission rate rᵢ of the transmission data d_{i_trsm} at the slave base station for which the data amount dᵢ is to be calculated, and inversely proportional to the sum of the wireless transmission rate r of the transmission data d_{mst_trsm} at the master base station 1 and the m wireless transmission rates r₁ to rₘ at the m slave base stations (or n wireless transmission rates r₁ to rₙ at the n slave base stations).

In other words, the generating unit 15 allocates the largest amount of data to the slave base station having the highest wireless transmission rate r, allocates the second largest amount of data to the slave base station having the second fastest wireless transmission rate r, ..., similarly allocates the second smallest amount of data to the slave base station having the second slowest wireless transmission rate r, and allocates the smallest amount of data to the slave base station having the slowest wireless transmission rate r.

When the generating unit 15 calculated m data amounts d₁ to dₘ for all m slave base stations using equation (1), the generating unit 15 calculates the sum of the m data amounts d₁ to dₘ (= d₁ + d₂ + ... + dₘ) and calculates the data amount dₘₛₜ (= D - (d₁ + d₂ + ... + dₘ)) of the master base station 1 by subtracting the sum (= d₁ + d₂ + ... + dₘ) from the total data amount D. Then, the generating unit 15 generates the transmission data d_{mst_trsm} of the master base station 1 and m pieces of transmission data d_{1_trsm} to d_{m_trsm} of m slave base stations based on the calculated data amounts d₁ to dₘ, dₘₛₜ (= (m+1) pieces of data amounts d₁ to dₘ₊₁) using a method described below.

Then, the generating unit 15 outputs the m pieces of transmission data d_{1_trsm} to d_{m_trsm} of the m slave base stations to the control unit 13, and outputs the transmission data d_{mst_trsm} of the master base station 1 to the generating unit 16.

The generating unit 16 receives the transmission data d_{mst_trsm} of the master base station 1 from the generating unit 15. Then, the generating unit 16 generates the transmission frame F_{mst_trsm} based on the transmission data d_{mst_trsm}, and outputs the generated transmission frame F_{mst_trsm} to the wireless unit 14.

The generating unit 16 also receives transmission data D_trsm from the control unit 13 when the joint transmission JT between the master base station 1 and the m slave base stations is not possible. Then, the generating unit 16 generates the transmission frame F_trsm based on the transmission data D_trsm, and outputs the generated transmission frame F_trsm to the wireless unit 14.

The transmission unit 17 is connected to the backhaul 4. Then, when the transmission unit 17 receives m pieces of transmission data d_{1_trsm} to d_{m_trsm} from the control unit 13, the transmission unit 17 transmits the m pieces of transmission data d_{1_trsm} to d_{m_trsm} to m slave base stations via the backhaul 4, respectively.

FIG. 3 is a schematic diagram of the slave base station 2-1 shown in FIG. 1. Referring to FIG. 3, the slave base station 2-1 includes an antenna 21, a radio unit 22, a receiving unit 23, a control unit 24, and a generating unit 25.

The radio unit 22 receives the RTS from the master base station 1 via the antenna 21 by wireless communication using the channel Ch_JT, and outputs the received RTS to the control unit 24.

Furthermore, the wireless unit 22 receives a confirmation frame F_{S_PB} from the master base station 1 via the antenna 21 by wireless communication using the channel Ch_JT, and outputs the received confirmation frame F_{S_PB} to the control unit 24.

Thereafter, when the wireless unit 22 receives the response frame F_{RSP} in response to the confirmation frame F_{S_PB} from the control unit 24, the wireless unit 22 transmits the response frame F_{RSP} to the master base station 1 via the antenna 21 by wireless communication using the channel Ch_JT.

Furthermore, the wireless unit 22 receives the notification of the transmission timing from the master base station 1 by wireless communication using the channel Ch_JT via the antenna 21, and outputs the received notification of the transmission timing to the control unit 24.

Furthermore, when the wireless unit 22 receives a transmission frame from the control unit 24, the wireless unit 22 transmits the transmission frame F_{1_trsm} to the wireless device 3 via the antenna 21 by wireless communication using the channel Ch_JT.

The receiving unit 23 is connected to the backhaul 4. Then, the receiving unit 23 receives the transmission data d_{1_trsm} from the transmitting unit 17 of the master base station 1 via the backhaul 4, and outputs the received transmission data d_{1_trsm} to the control unit 24.

The control unit 24 receives the RTS from the wireless unit 22. The control unit 24 also receives the confirmation frame F_{S_PB} from the wireless unit 22. Then, the control unit 24 judges whether the slave base station 2-1 is capable of joint transmission JT with the master base station 1 in response to the confirmation frame F_{S_PB}.

In this case, for example, when the slave base station 2-1 is performing wireless communication with a wireless device other than the wireless device 3, the control unit 24 judges that the slave base station 2-1 is unable to perform joint transmission JT with the master base station 1, and when the slave base station 2-1 is not performing wireless communication with any wireless device other than the wireless device 3, the control unit 24 judges that the slave base station 2-1 is capable of joint transmission JT with the master base station 1.

It may also be possible to judge whether joint transmission JT is possible by the following method. The wireless unit 22 detects a received signal strength indicator (RSSI) when a radio wave is transmitted through the antenna 21 on the channel Ch-JT, and outputs the detected received signal strength indicator (RSSI) to the control unit 24. When the received signal strength RSSI received from the wireless unit 22 is equal to or less than a threshold RSSI_th (eg, -83 dBm), the control unit 24 judges that the other wireless communication is not performed and that the joint transmission JT is possible. On the other hand, when the received signal strength RSSI is greater than the threshold RSSI_th, the control unit 24 judges that the other wireless communication is performed and that the joint transmission JT is not possible.

When the control unit 24 judges that the joint transmission JT is possible, the control unit 24 generates the response frame F_{RSP} containing "JT_OK". Then, the control unit 24 outputs the response frame F_{RSP} including "JT_OK" to the wireless unit 22, and controls the wireless unit 22 so as to transmit the response frame F_{RSP} including "JT_OK" to the master base station 1 by wireless communication using the channel Ch_JT.

On the other hand, when the control unit 24 judges that the joint transmission JT is not possible, the control unit 24 generates the response frame F_{RSP} including "JT_NG". Then, the control unit 24 outputs the response frame F_{RSP} including "JT_NG" to the wireless unit 22, and controls the wireless unit 22 so as to transmit the response frame F_{RSP} including "JT_NG" to the master base station 1 by wireless communication using the channel Ch_JT.

In addition, the control unit 24 receives the notification of the transmission timing from the wireless unit 22 and receives the transmission data d_{1_trsm} from the receiving unit 23. Then, the control unit 24 outputs the transmission data d_{1_trsm} to the generating unit 25, and controls the generating unit 25 to execute a frame generation process based on the transmission data d_{1_trsm}.

Thereafter, the control unit 24 receives the transmission frame F_{1_trsm} (PPDU1) including the transmission data d_{1_trsm} from the generating unit 25.

Then, when the transmission timing arrives, the control unit 24 outputs the transmission frame F_{1_trsm} (PPDU1) including the transmission data d_{1_trsm} to the wireless unit 22, and controls the wireless unit 22 so as to transmit the transmission frame F_{1_trsm} (PPDU1) to the wireless device 3 by wireless communication using the channel Ch_JT.

Upon receiving the transmission data d_{1_trsm} from the control unit 24, the generating unit 25 executes a transmission frame generation process to generate a transmission frame F_{1_trsm} (PPDU1) including the received transmission data d_{1_trsm} and outputs the generated transmission frame F_{1_trsm} (PPDU1) to the control unit 24.

Each of the slave base stations 2-2 to 2-n shown in FIG. 1 has the same configuration as the slave base station 2-1 shown in FIG. 3.

FIG. 4 is a schematic diagram of the wireless device 3 shown in FIG. 1. Referring to FIG. 4, the wireless device 3 includes an antenna 31, a wireless unit 32, a control unit 33, and an application 34.

The wireless unit 32 receives an RTS from the master base station 1 via the antenna 31 by wireless communication using the channel Ch_JT, and outputs the received RTS to the control unit 33.

Thereafter, the wireless unit 32 receives the CTS from the control unit 33. Then, the wireless unit 32 transmits the CTS to the master base station 1 via the antenna 31 by wireless communication using the channel Ch_JT.

In addition, the wireless unit 32 receives transmission frames F_{mst_trsm}, F_{1_trsm} to F_{m_trsm} (= (m+1) of transmission frames) from the master base station 1 and the m slave base stations via the antenna 31 by wireless communication using the channel Ch_JT, and outputs the received transmission frames F_{mst_trsm}, F_{1_trsm} to F_{m_trsm} (= (m+1) of transmission frames) to the control unit 33.

Thereafter, when the wireless unit 32 receives the block Ack from the control unit 33, the wireless unit 32 transmits the block Ack to the master base station 1 via the antenna 31 by wireless communication using the channel Ch_JT.

Furthermore, when joint transmission JT is not possible, the wireless unit 32 receives the transmission frame F_trsm (= a frame including transmission data D_trsm) from the master base station 1 via the antenna 31 by wireless communication using the channel Ch_JT, and outputs the received transmission frame F_trsm (= a frame including transmission data D_trsm) to the control unit 33.

Thereafter, when the wireless unit 32 receives the block Ack from the control unit 33, the wireless unit 32 transmits the block Ack to the master base station 1 via the antenna 31 by wireless communication using the channel Ch_JT.

The control unit 33 receives the RTS from the wireless unit 32. The control unit 33 receives from the wireless unit 32 the received signal strength RSSI when radio waves are transmitted on the channel Ch-JT via the antenna 31, and when the received signal strength RSSI is equal to or less than the threshold RSSI_th, judges that no other wireless communication is being performed, and when the received signal strength RSSI is greater than the threshold RSSI_th, judges that other wireless communication is being performed.

When the control unit 33 judges that other wireless communication is not performed, the control unit 33 outputs a CTS to the wireless unit 32 and controls the wireless unit 32 to transmit the CTS to the master base station 1 via wireless communication using the channel Ch_JT.

Thereafter, when the control unit 33 receives the transmission frames F_{mst_trsm}, F_{1_trsm} to F_{m_trsm} (=(m+1) transmission frames) from the wireless unit 32, the control unit 33 decodes the transmission frames F_{mst_trsm}, F_{1_trsm} to F_{m_trsm} (=(m+1) transmission frames) and outputs the transmission data D_trsm to the application 34.

Subsequently, the control unit 33 outputs the block Ack to the wireless unit 32, and controls the wireless unit 32 so as to transmit the block Ack to the master base station 1 by wireless communication using the channel Ch_JT.

Furthermore, when the control unit 33 receives the transmission frame F_trsm (= a frame including the transmission data D_trsm) from the wireless unit 32, the control unit 33 decodes the transmission frame (= a frame including transmission data D_trsm) and outputs the transmission data D_trsm to the application 34.

Thereafter, the control unit 33 outputs the block Ack to the wireless unit 32 and controls the wireless unit 32 so as to transmit the block Ack to the master base station 1 by wireless communication using the channel Ch_JT.

The application 34 receives the transmission data D_trsm from the control unit 33.

FIG. 5 is a conceptual diagram for explaining a method of generating transmission data in the master base station 1 and m slave base stations.

Referring to FIG. 5, the transmission data D_trsm has a data amount D. The generating unit 15 of the master base station 1 calculates the data amounts d₁ to dₘ to be allocated to the m slave base stations by the method described above, then cuts out the portion of the transmission data D_trsm with the data amount d₁ from the beginning of the transmission data D_trsm, and generates a transmission data d_{1_trsm} having the data amount d₁.

Next, the generating unit 15 cuts out a portion of the data amount d₂ from the beginning of the transmission data D_trsm from which the data amount d₁ has been cut out, and generates a transmission data d_{2_trsm} having the data amount d₂.

Furthermore, the generating unit 15 cuts out a portion of data amount d₃ from the beginning of the transmission data D_trsm from which the data amount d₁+d₂ has been cut out, and generates transmission data d_{3_trsm} having the data amount d₃.

Similarly, the generating unit 15 cuts out the portion of the data amount dₘ from the beginning of the transmission data D_trsm from which the data amount d₁+d₂+ . . . +dₘ₋₁ has been cut out, and generates transmission data d_{m_trsm} having the data amount dₘ.

Then, the generating unit 15 generates the transmission data d_{mst_trsm} having the remaining data amount (=D-(d₁+d₂+ . . . +dₘ)) of the transmission data D_trsm.

Then, the generating unit 15 sets the transmission data d_{1_trsm} to d_{m_trsm} as transmission data to be transmitted to the m slave base stations, and sets the transmission data d_{mst_trsm} as transmission data for the master base station 1.

FIG. 6 is a conceptual diagram showing the structure of a transmission frame. The transmission frame shown in FIG. 6 has the structure of a transmission frame in IEEE 802.11a.

Referring to FIG. 6, a transmission frame PPDU (PLCP Protocol Data Unit) includes RATE, Reserved, Length, Parity, Tail, Service, PSDU, Tail, and Padding.

RATE, Reserved, Length, Parity, Tail and Service constitute the PLCP Header.

The PSDU (PLCP Service Data Unit) follows the PLCP Header and is passed from the upper layer to the physical layer. Note that PLCP is an abbreviation for Physical Layer Convergence Protocol.

Since a bit-tailing convolutional code is used as the error correction code in the physical layer (PHY layer), tail (Tail) bits are added after the PSDU in the physical layer (PHY layer).

The end of the packet is terminated with an Orthogonal Frequency Division Multiplexing (OFDM) symbol, and bits are padded as necessary.

RATE, Reserved, Length, Parity and Tail constitute the Signal, and Service, PSDU, Tail and Padding constitute the Data.

Therefore, a PPDU consists of Signal and Data. When the master base station 1 generates a transmission frame, the transmission data d_{mst_trsm} is stored in Data. Furthermore, when each of the m slave base stations generates a transmission frame, the transmission data d_{i_trsm} (i=1 to m) is stored in Data.

In the "transmission frame generation process", the master base station 1 generates the transmission frame F_{mst_trsm} (=PPDU0) having the structure shown in FIG. 6.

In addition, the slave base station 2-1 generates the transmission frame F_{1_trsm} (=PPDU1) having the structure shown in FIG. 6 in the "transmission frame generation process", and the slave base station 2-2 generates the transmission frame F_{2_trsm} (=PPDU2) having the structure shown in FIG. 6 in the "transmission frame generation process".

That is, the master base station 1 executes a transmission frame generation process, which is a process for generating the transmission frame F_{mst_trsm} (=PPDU0) based on the data amount dₘₛₜ, and the slave base station 2-1 executes a transmission frame generation process, which is a process for generating a transmission frame F_{1_trsm} (=PPDU1) based on the data amount d₁.

FIG. 7 is a schematic diagram showing frame processing in the communication system 10 shown in FIG. 1. In FIG. 7, only the slave base station 2-1 out of the m slave base stations is shown.

Referring to Fig. 7, the master base station 1 transmits the RTS to the slave base station 2-1 and the wireless device 3 by wireless communication using the channel Ch_JT.

Then, the slave base station 2-1 and the wireless device 3 receive the RTS from the master base station 1 by wireless communication using the channel Ch_JT.

After that, the wireless device 3 transmits the CTS to the master base station 1 by wireless communication using the channel Ch_JT.

Then, when the master base station 1 receives the CTS from the wireless device 3 by wireless communication using channel Ch_JT, the master base station 1 generates the confirmation frame F_{S_PB} and transmits the confirmation frame F_{S_PB} to the slave base station 2-1 by wireless communication using channel Ch_JT.

When the slave base station 2-1 receives the confirmation frame F_{S_PB} from the master base station 1 by wireless communication using the channel Ch_JT, the slave base station 2-1 judges whether or not the joint transmission JT with the master base station 1 is possible.

The slave base station 2-1 then transmits the response frame F_{RSP} (=the response frame F_{RSP} including "JT_OK" or "JT_NG") in response to the confirmation frame F_{S_PB} to the master base station 1 by wireless communication using the channel Ch_JT.

The master base station 1 receives the response frame F_{RSP} from the slave base station 2-1 by wireless communication using the channel Ch_JT.

Then, when the master base station 1 judges that the joint transmission JT is possible based on the response frame F_{RSP} (=response frame F_{RSP} including "JT_OK"), the master base station 1 calculates the amounts of data dₘₛₜ, d₁ to be allocated to the master base station 1 and the slave base station 2-1.

After that, the master base station 1 executes the following steps (1) to (3).
(1) The master base station 1 executes transmitting a "notification of transmission timing" to the slave base station 2-1 by wireless communication using the channel Ch_JT, (2) The master base station 1 executes distributing transmission data d_{1_trsm} (transmission data having a data amount d₁) to the slave base station 2-1 via the backhaul 4 in parallel with (1), and (3) The master base station 1 and the slave base station 2-1 executes the process of generating a transmission frame in parallel with (1).

In this case, the above (2) is executed earliest in time, (1) above is executed in parallel with (2), and After (2) is completed, (3) above is executed in parallel with (1). As a result, the time required for distributing transmission data (2) in the master base station 1 partially overlaps with the time required for transmitting the transmission timing notification (1), and the time required for generating a transmission frame (3) in the master base station 1 and the slave base station 2-1 partially overlaps with the time required for transmitting the transmission timing notification (1).

The distribution of transmission data in the master base station 1 (2) and the process of generating transmission frames in the master base station 1 and the slave base station 2-1 (3) are executed in series.

Here, (2) the master base station 1 distributes the transmission data d_{1_trsm} (transmission data having the data amount d₁) to the slave base station 2-1 via the backhaul 4 in parallel with (1) is that the time required to distribute the transmission data d_{1_trsm} (transmission data having the data amount d₁) to the slave base station 2-1 and the time required to transmit the notification of the transmission timing in (1) overlap for at least a portion of the time.

In addition, (3) the master base station 1 and the slave base station 2-1 execute the process of generating a transmission frame in parallel with (1) is that the time required for the process of generating the transmission frame and the time required for transmitting the notification of the transmission timing in (1) overlap at least partially.

After the process of generating the transmission frame is completed, the master base station 1 and the slave base station 2-1 simultaneously transmit transmission frames F_{mst_trsm} (=PPDU0) and F_{1_trsm} (=PPDU1) to the wireless device 3, respectively, by the wireless communication using channel Ch_JT in the joint transmission JT.

Then, the wireless device 3 receives the transmission frame F_{mst_trsm} (=PPDU0) from the master base station 1 by the wireless communication using channel Ch_JT, and receives the transmission frame F_{1_trsm} (=PPDU1) from the slave base station 2-1, and then transmits the block Ack to the master base station 1 by the wireless communication using channel Ch_JT.

The master base station 1 then receives the block Ack from the wireless device 3 by the wireless communication using channel Ch_JT, and detects that the wireless device 3 has received the transmission frames F_{mst_trsm} (=PPDU0) and F_{1_trsm} (=PPDU1) transmitted by the joint transmission JT by the master base station 1 and the slave base station 2-1.

Therefore, the master base station 1 executes transmitting the "notification of transmission timing" to the slave base station 2-1 and distributing the transmission data d_{1_trsm} to the slave base station 2-1 via the backhaul 4, and after performing the process of generating the transmission frames, the master base station 1 and the slave base station 2-1 transmit the transmission frames F_{mst_trsm} (=PPDU0) and F_{1_trsm} (=PPDU1) which are frames in the physical layer (PHY layer) to the wireless device 3, respectively.

In FIG. 7, the master base station 1 transmits the RTS to the slave base station 2-1 and the wireless device 3 at timing t₁, and then receives the block Ack from the wireless device 3 at timing t₂.

As a result, the time required for data transmission from the master base station 1 and the slave base station 2-1 to the wireless device 3 is t₂-t₁.

FIG. 8 is a schematic diagram showing conventional frame processing. Referring to FIG 8, in conventional frame processing, the master base station 1 transmits the notification of the transmission timing to the slave base station 2-1 by wireless communication using channel Ch_JT, and then distributes the transmission data by wireless communication. Thereafter, the master base station 1 and the slave base station 2-1 perform a process of generating the transmission frame.

That is, in FIG. 8, the transmission of the notification of the transmission timing to the slave base station 2-1, the distribution of the transmission data, and the generation process of the transmission frame are executed in series.

As a result, the timing at which the master base station 1 and the slave base station 2-1 complete transmitting of the transmission frames F_{mst_trsm} (=PPDU0) and F_{1_trsm} (=PPDU1), respectively, which are frames of physical layer (PHY layer), to the wireless device 3 through wireless communication using channel Ch_JT, is timing t₃.

Then, the master base station 1 receives the block Ack from the wireless device 3 at timing t₄ which is later than timing t₃.

Timing t₄ in FIG. 8 is a timing that comes after timing t₂ at which the master base station 1 receives the block Ack from the wireless device 3.

Therefore, as shown in FIG. 7, in the communication system 10 according to embodiment 1, since the master base station 1 distributes transmission data to the slave base station 2-1 using the backhaul 4, the amount of wireless resources used is less than when the transmission data is distributed to the slave base station 2-1 by wireless communication. As a result, the throughput can be improved.

Also, as shown in FIG. 7, in the communication system 10 according to the first embodiment, that the master base station 1 distributes transmission data to the slave base station 2-1 using the backhaul 4 and the master base station 1 and the slave base station 2-1 perform the process of generating the transmission frame are executed in parallel with that the master base station 1 transmits the notification of the transmission timing to the slave base station 2-1 by wireless communication using the channel Ch_JT. Therefore, compared to the frame processing shown in FIG. 8, the time required to transmit the transmission data to the wireless device 3 can be shortened, and the throughput can be further improved.

FIG. 9 is another schematic diagram showing frame processing in the communication system 10 shown in FIG. 1. Note that FIG. 9 shows frame processing in the case where the number of slave base stations is two.

Referring to FIG. 9, the master base station 1 transmits an RTS to the slave base stations 2-1 and 2-2 and the wireless device 3 by the wireless communication using the channel Ch_JT.

Then, the slave base stations 2-1 and 2-2 and the wireless device 3 receive the RTS through the wireless communication using the channel Ch_JT.

After that, the wireless device 3 transmits the CTS to the master base station 1 by wireless communication using the channel Ch_JT.

Then, when the master base station 1 receives the CTS by wireless communication using the channel Ch_JT, the master base station 1 transmits the confirmation frame F_{S_PB} to the slave base stations 2-1 and 2-2 by wireless communication using the channel Ch_JT.

The slave base stations 2-1 and 2-2 receive the confirmation frame F_{S_PB} from the master base station 1 by wireless communication using the channel Ch_JT.

Then, each of the slave base stations 2-1 and 2-2 judges whether or not the joint transmission JT with the master base station 1 is possible, and when each of the slave base stations 2-1 and 2-2 is judged that the joint transmission JT with the master base station 1 is possible, each of the slave base stations 2-1 and 2-2 generates the response frame F_{RSP} including "JT_OK", when each of the slave base stations 2-1 and 2-2 judges that joint transmission JT with the master base station 1 is not possible, each of the slave base stations 2-1 and 2-2 generates the response frame F_{RSP} including "JT_NG". The same applies to the slave base station 2-2.

Then, each of the slave base stations 2-1 and 2-2 transmits the response frame F_{RSP} (=the response frame F_{RSP} including "JT_OK" or "JT_NG") in response to the confirmation frame F_{S_PB} to the master base station 1 by wireless communication using the channel Ch_JT.

The master base station 1 receives response frames F_{RSP_1} and F_{RSP_2} from the slave base stations 2-1 and 2-2, respectively, by wireless communication using the channel Ch_JT.

Then, when the master base station 1 judges that joint transmission JT is possible based on the response frames F_{RSP_1} and F_{RSP_2}, the master base station 1 calculates the amounts of data d₁ and d₂ to be allocated to the slave base stations 2-1 and 2-2, respectively.

After that, the master base station 1 executes the following steps (1) to (3).
(1) The master base station 1 executes to transmit a "notification of transmission timing" to the slave base stations 2-1 and 2-2 by wireless communication using the channel Ch_JT,
(2) In parallel with (1), the master base station 1 distributes transmission data d_{1_trsm} (transmission data having the data amount d₁) and transmission data d_{2_trsm} (transmission data having the data amount d₂) to the slave base stations 2-1 and 2-2 via the backhaul 4, respectively,
(3) The master base station 1 and the slave base stations 2-1 and 2-2 execute processing for generating the transmission frame in parallel with (1).

In this case, (2) above is executed earliest in time, (1) above is executed in parallel with (2), and (3) above is executed in parallel with (1) after (2) is completed. As a result, the time required for the distribution of transmission data (2) in the master base station 1 partially overlaps with the time required for the transmission of the notification of the transmission timing (1), and the time required for the process of generating a transmission frame (3) in the master base station 1 and the slave base stations 2-1 and 2-2 partially overlaps with the time required for the transmission of the notification of the transmission timing (1).

The distribution of transmission data in the master base station 1 (2) and the process of generating transmission frames in the master base station 1 and the slave base stations 2-1 and 2-2 (3) are executed in series.

Then, in the joint transmission JT, the master base station 1, the slave base station 2-1 and the slave base station 2-2 simultaneously transmit transmission frames F_{mst_trsm} (=PPDU0), F_{1_trsm} (=PPDU1) and F_{2_trsm} (=PPDU2) to the wireless device 3, respectively, by the wireless communication using the channel Ch_JT.

Then, the wireless device 3 receives, by wireless communication using the channel Ch_JT, the transmission frame F_{mst_trsm} (=PPDU0) from the master base station 1, receives the transmission frame F_{1_trsm} (=PPDU1) from the slave base station 2-1, receives the transmission frame F_{2_trsm} (=PPDU1) from the slave base station 2-2, and then, the wireless device 3 transmits the block Ack to the master base station 1 by wireless communication using the channel Ch_JT.

Then, the master base station 1 receives a block Ack from the wireless device 3 by wireless communication using the channel Ch_JT and detects that the wireless device 3 has received the transmission frames F_{mst_trsm} (=PPDU0), F_{1_trsm} (=PPDU1), and F_{2_trsm} (=PPDU2) by the joint transmission JT between the master base station 1 and the slave base stations 2-1 and 2-2.

Therefore, the master base station 1 transmits the "transmission timing notification" to the slave base stations 2-1 and 2-2, the master base station 1 distributes transmission data to the slave base stations 2-1 and 2-2 via the backhaul 4 in parallel with transmitting the "notification of transmission timing" to the slave base stations 2-1 and 2-2, and after the master base station 1 and the slave base stations 2-1 and 2-2 execute generation process of transmission frames in parallel with transmitting the "notification of transmission timing" to the slave base stations 2-1 and 2-2, the master base station 1 and the slave base stations 2-1 and 2-2 transmit the transmission frames F_{mst_trsm} (=PPDU0), F_{1_trsm} (=PPDU1), and F_{2_trsm} (=PPDU2) which are physical layer (PHY layer) frames, respectively, to the wireless device 3.

Therefore, as shown in FIG. 9, in the communication system 10 according to the first embodiment, the master base station 1 distributes the transmission data to the slave base stations 2-1 and 2-2 using the backhaul 4, so that the amount of used wireless resources is less than the case shown in FIG. 8 than when the transmission data is distributed to the slave base stations 2-1 and 2-2 by wireless communication, therefore the throughput can be improved compared to the case shown in FIG. 8.

As shown in FIG. 9, in the communication system 10 according to the first embodiment, since the master base station 1 executes to transmit the notification of transmission timing to the slave base stations 2-1 and 2-2 by wireless communication using the channel Ch_JT, the master base station 1 executes to distribute transmission data to the slave base stations 2-1 and 2-2 using the backhaul 4 in parallel with the transmission of the "notification of transmission timing" to the slave base stations 2-1 and 2-2, and the master base station 1 and the slave base stations 2-1 and 2-2 execute the process of generating a transmission frame in parallel with the transmission of the "notification of transmission timing" to the slave base stations 2-1 and 2-2, compared to the frame processing shown in FIG. 8, the time required to transmit the transmission data to the wireless device 3 can be shortened, and the throughput can be further improved.

In FIG. 7, the frame processing has been described for the case where there is one slave base station, and in FIG. 9, the frame processing has been described for the case where there are two slave base stations.

As a result, the addition of one slave base station changes the number of confirmation frames F_{S_PB}, the number of response frames F_{RSP}, the calculation of the amount of data to be allocated to the slave base stations, the distribution of transmission data to the slave base stations, and the number of transmission frames PPDU. Therefore, if frame processing for the case where there is one slave base station and frame processing for the case where there are two slave base stations are explained, frame processing can generally be performed in a manner similar to that shown in FIG. 9 even when there are m slave base stations capable of joint transmission JT.

FIGS. 10 and 11 are first and second flowcharts, respectively, for explaining the operation of the communication system 10 shown in FIG. 1. Referring to FIG. 10, when operation of the communication system 10 is started, the master base station 1 transmits the RTS to the slave base stations (=n slave base stations 2-1 to 2-n) and the wireless device 3 by wireless communication using the channel Ch_JT (step S1).

Then, the slave base station (=n slave base stations 2-1 to 2-n) receives the RTS from the master base station 1 by wireless communication using channel Ch_JT (step S2), and the wireless device 3 receives the RTS from the master base station 1 by wireless communication using channel Ch_JT (step S3).

After that, the wireless device 3 transmits the CTS to the master base station 1 by wireless communication using the channel Ch_JT (step S4).

The master base station 1 receives the CTS from the wireless device 3 by wireless communication using the channel Ch_JT (step S5).

Then, the master base station 1 transmits the confirmation frame F_{S_PB} to confirm whether or not the joint transmission JT can be started to the slave base stations (=n slave base stations 2-1 to 2-n) by wireless communication using the channel Ch_JT (step S6).

When the slave base station (= n slave base stations 2-1 to 2-n) receives the confirmation frame F_{S_PB} from the master base station 1 by wireless communication using channel Ch_JT, the slave base station (= n slave base stations 2-1 to 2-n) transmits the response frame F_{RSP} to the master base station 1 in response to the confirmation frame F_{S_PB}, indicating whether or not the joint transmission JT is possible (step S7).

Then, the master base station 1 receives the response frame F_{RSP} from the slave base stations (=n slave base stations 2-1 to 2-n) by wireless communication using the channel Ch_JT (step S8).

Then, the master base station 1 judges whether or not the joint transmission JT is possible based on the response frame F_{RSP} (=n response frames F_{RSP}) (step S9).

In this case, the master base station 1 judges that joint transmission JT is possible when the response frame F_{RSP} (= at least one of the n response frames F_{RSP}) includes "JT_OK", and judges that joint transmission JT is not possible when the response frame F_{RSP} (= all of the n response frames F_{RSP}) includes "JT_NG".

When it is judged in step S9 that joint transmission JT is possible, the master base station 1 calculates the amount of data to be distributed to the slave base stations (=m slave base stations) (step S10).

Then, (1) the master base station 1 transmits the notification of the transmission timing to the slave base stations (= the m slave base stations capable of joint transmission JT) via in-band (= via wireless communication using the same channel as the channel when the master base station and each of the m slave base stations transmit data to the wireless device), (2) the master base station 1 distributes transmission data to the slave base stations (= m slave base stations) via the backhaul 4 in parallel with (1), and (3) The master base station 1 and the slave base stations (=m slave base stations) perform a transmission frame generation process in parallel with (1) (step S11).

Then, after step S11, the operation of the communication system 10 proceeds to step S12 in FIG. 11, and when it is judged in step S9 that joint transmission JT is not possible, the operation of the communication system 10 proceeds to step S16 in FIG. 11.

Referring to FIG. 11, after the step S11 in FIG. 10, the master base station 1 and the slave base stations (=m slave base stations) simultaneously transmit transmission data (transmission frames) to the wireless device 3 by wireless communication using the channel Ch_JT (step S12).

The wireless device 3 receives data from the master base station 1 and the slave base stations (=m slave base stations) by wireless communication using the channel Ch_JT (step S13).

Then, the wireless device 3 transmits the block Ack to the master base station 1 by wireless communication using the channel Ch_JT (step S14).

The master base station 1 receives the block Ack from the wireless device 3 by wireless communication using the channel Ch_JT (step S15).

On the other hand, when it is judged in step S9 of FIG. 10 that joint transmission JT is not possible, only the master base station 1 transmits the transmission data D_trsm to the wireless device 3 by wireless communication using the channel Ch_JT, or the master base station 1 stops transmitting data to the wireless device 3 (step S16).

After that, the wireless device 3 judges whether or not data has been received from the master base station 1 by wireless communication using the channel Ch_JT (step S17).

In this case, when the master base station 1 transmitted transmission data D_trsm in step S16, the wireless device 3 judges in step S17 that the data has been received, and when the master base station 1 stops transmitting data in step S16, the wireless device 3 judges in step S17 that the data has not been received.

When it is judged in step S17 that the wireless device 3 has received the data, the above-mentioned steps S14 and S15 are sequentially executed.

After the step S15, or when it is judged in step S17 that the wireless device 3 has not received any data, the operation of the communication system 10 ends.

In the flowcharts shown in FIGS. 10 and 11, the following steps (1) to (3) are executed in step S11.
(1) The master base station 1 transmits the notification of the transmission timing to the slave base stations (= the m slave base stations) via in-band (= via wireless communication using the same channel as the channel used when the master base station and each of the m slave base stations transmit data to the wireless device).
(2) In parallel with (1), the master base station 1 distributes transmission data to the slave base stations (=m slave base stations) via the backhaul 4.
(3) The master base station 1 and the slave base stations (=m slave base stations) perform the transmission frame generation process in parallel with (1).

Therefore, since the transmission data is distributed to the slave base stations (=m slave base stations) using the backhaul 4, the amount of wireless resources used can be reduced compared to the case where the transmission data is distributed to the slave base stations (=m slave base stations) by wireless communication, and as a result, the throughput can be improved.

In addition, the master base station 1 distributes transmission data to the slave base stations (= m slave base stations) using the backhaul 4, and the master base station 1 and the slave base stations (= m slave base stations) perform the transmission frame generation process in parallel with the master base station 1 transmitting the notification of the transmission timing to the slave base stations (= m slave base stations) by wireless communication using channel Ch_JT, so that the time required to transmit the transmission data to the wireless device 3 can be further shortened and the throughput can be further improved.

In the above-described first embodiment, in step S11 of FIG. 10, (2) does not have to be executed in parallel with (1), and (3) does not have to be executed in parallel with (1).

Even if (2) and (3) are not executed in parallel with (1), if the master base station 1 distributes the transmission data to the slave base stations (= m slave base stations) via the backhaul 4, the amount of wireless resources used can be reduced compared to distributing the transmission data to the slave base stations (= m slave base stations) via wireless communication, and the throughput can be improved when transmitting the transmission frames F_{mst_}trsm, F_{1_trsm} to F_{m_trsm} from the master base station 1 and the m slave base stations to the wireless device 3.

### (Example 1)

When data is transmitted to the wireless device 3 using one master base station and two slave base stations A and B, the total amount of data transmitted to the wireless device 3, the wireless transmission speed of the one master base station, and the wireless transmission speeds of the two slave base stations A and B are shown in Table 1.

**[Table 1]**

| | MASTER BASE STATION | SLAVE BASE STATION A | SLAVE BASE STATION B |
|---|---|---|---|
| WERELESS TRANSMISSION SPEED | 4.0[Gbps] | 2.7[Gbps] | 3.3[Gbps] |
| TOTAL DATA VOLUME | 250[Kbyte] | | |

When the amount of data to be allocated to slave base stations A and B is calculated by equation (1) using the total data amount and wireless transmission rate shown in Table 1, the amount of data d₁ to be allocated to slave base station A is as shown in equation (2), and the amount of data d₂ to be allocated to slave base station B is as shown in equation (3).
[Math. 2] ${d}_{1} = \frac{2.7 \times {10}^{9}}{4.0 \times {10}^{9} + 2.7 \times {10}^{9} + 3.3 \times {10}^{9}} \times 250 \times {10}^{3} = 6.75 \times {10}^{3} \left[byte\right]$ (2)
[Math. 3] ${d}_{2} = \frac{3.3 \times {10}^{9}}{4.0 \times {10}^{9} + 2.7 \times {10}^{9} + 3.3 \times {10}^{9}} \times 250 \times {10}^{3} = 82.5 \times {10}^{3} \left[byte\right]$ (3)

As a result, the amount of data allocated to the master base station is 250 [Kbytes]-(67.5 [Kbytes]+82.5 [Kbytes])=100 [Kbytes].

The only difference between formula (2) and formula (3) is that "2.7×10⁹" in formula (2) is "3.3×10⁹" in formula (3), and the rest is the same.

The numerator "2.7×10⁹" in equation (2) is the wireless transmission rate at the slave base station A, and the numerator "3.3×10⁹" in equation (3) is the wireless transmission rate at the slave base station B.

Therefore, it was found that, by using equation (1), the data amounts d₁ and d₂ allocated to the slave base station A and the slave base station B can be calculated in proportion to the wireless transmission speed at the slave base station A and the wireless transmission speed at the slave base station B, respectively.

### [Embodiment 2]

Fig. 12 is a schematic diagram of a communication system according to embodiment 2. Referring to Fig. 12, a communication system 10A according to embodiment 2 is the same as the communication system 10 except that the master base station 1 of the communication system 10 shown in FIG. 1 is replaced with a master base station 1A.

The master base station 1A, n slave base stations 2-1 to 2-n, and the wireless device 3 are arranged in a wireless communication space.

The master base station 1A is connected to n slave base stations 2-1 to 2-n via a backhaul 4.

The master base station 1A and the n slave base stations 2-1 to 2-n are located at different positions from one another. The wireless device 3 is placed within the communication range of wireless communication by the master base station 1A and the n slave base stations 2-1 to 2-n.

The master base station 1A performs wireless communication employing CSMA/CA on the channel Ch_JT.

When the master base station 1A judges that joint transmission JT is possible based on the n response frames F_{RSP} received from the n slave base stations 2-1 to 2-n, the master base station 1A calculates the amounts of data d₁ to dₘ to be allocated to the m slave base stations.

Then, the master base station 1A calculates the necessary padding time using the data amounts d₁ to dₘ by a method to be described later.

Then, the master base station 1A executes the following (1A), (2A), and (3A).
(1A) The master base station 1A transmits the notification of transmission timing and padding PD having a length equal to the padding time to m slave base stations by wireless communication using the channel Ch_JT.
(2A) The master base station 1A transmits m pieces of transmission data having m pieces of data amounts, respectively, to m slave base stations, respectively, via the backhaul 4 in parallel with the "transmission of padding PD" in (1A).
(3A) The master base station 1A and the m slave base stations perform the transmission frame generation process in parallel with the "transmission of padding PD" in (1A).

Then, when the padding time ends (i.e., when the transmission of the padding PD ends), the master base station 1A and the m slave base stations simultaneously transmit the transmission frame to the wireless device 3 by wireless communication using the channel Ch_JT.

In addition, the master base station 1A executes the same operations as the master base station 1 described above.

FIG. 13 is a schematic diagram of the master base station 1A shown in FIG. 12. Referring to FIG. 13, the master base station 1A is the same as the master base station 1, except that the control unit 13 of the master base station 1 shown in Fig. 2 is replaced with a control unit 13A and a calculation unit 18 is added.

FIG. 14 is a schematic diagram showing information held in advance by the control unit 13A. Referring to FIG. 14, the control unit 13A holds basic information B_info in advance. The basic information B_info is basic information used when calculating the padding time.

The basic information B_info includes a transmission rate, a transmission frame generation processing time, a transmission time T, and a SIFS time T_{SIFS}.

Addresses Add₁ to Addₙ are the addresses of slave base stations 2-1 to 2-n, respectively, and are associated with transmission speeds and transmission frame generation processing times.

The transmission rate S₁ is the transmission rate of the backhaul 4 between the master base station 1A and the slave base station 2-1 having the address Add₁, the transmission rate S₂ is the transmission rate of the backhaul 4 between the master base station 1A and the slave base station 2-2 having the address Add₂, similarly, the transmission rate Sₙ is the transmission rate of the backhaul 4 between the master base station 1A and a slave base station 2-n having an address Addₙ.

The transmission rates S₁ to Sₙ are corresponded to the addresses Add₁ to Addₙ, respectively.

Furthermore, the transmission frame generation processing time t_{1_F} is the generation processing time of the transmission frame in the slave base station 2-1 having the address Add₁, the transmission frame generation processing time t_{2_F} is the generation processing time of the transmission frame in the slave base station 2-2 having the address Add₂, similarly, the transmission frame generation processing time t_{n_F} is the transmission frame generation processing time in the slave base station 2-n having the address Addₙ.

The transmission frame generation processing times t_{1_F} to t_{n_F} are associated with the addresses Add₁ to Addₙ, respectively.

Furthermore, the transmission time T is the transmission time for notifying the transmission timing transmitted from the master base station 1A to each of the n slave base stations 2-1 to 2-n.

Furthermore, the SIFS time T_{SIFS} is the time length of the SIFS.

Each of the n transmission frame generation processing times t_{1_F} to t_{n_F} includes a signaling delay time. The SIFS time T_{SIFS} has a value specified in IEEE802.11.

The control unit 13A receives from the generating unit 15 the data amounts d₁ to dₘ of the transmission data d_{1_trsm} to d_{m_trsm} to be allocated to the m slave base stations 2-1 to 2-m. Then, the control unit 13A detects m transmission rates S₁ to Sₘ associated with the m addresses Add₁ to Addₘ of the m slave base stations 2-1 to 2-m, respectively, from the basic information B_info. Here, each of the m transmission rates S₁ to Sₘ is one of the transmission rates S₁ to Sₙ included in the basic information B_info.

Furthermore, the control unit 13A detects m transmission frame generation processing times t_{1_F} to t_{m_F} associated with the m addresses Add₁ to Addₘ, respectively, from the basic information B_info. Here, each of the m transmission frame generation processing times t_{1_F} to t_{m_F} is one of the transmission frame generation processing times t_{1_F} to t_{n_F} included in the basic information B_info.

Furthermore, the control unit 13A detects the transmission time T from the basic information B_info.

Furthermore, the control unit 13A detects the SIFS time T_{SIFS} from the basic information B_info.

Then, the control unit 13A outputs m data amounts d₁ to dₘ, m transmission speeds S₁ to Sₘ, m transmission frame generation processing times t_{1_F} to t_{m_F}, transmission time T and SIFS time T_{SIFS} to the calculation unit 18, and controls the calculation unit 18 to calculate the minimum required padding time T_{padding_nd}.

A method for calculating the padding time T_{padding_nd} will now be described. The calculation unit 18 receives m data amounts d₁ to dₘ, m transmission rates S₁ to Sₘ, m transmission frame generation processing times t_{1_F} to t_{m_F}, the transmission time T, and the SIFS time T_{SIFS} from the control unit 13A.

Then, the calculation unit 18 calculates m padding times T_{padding_1} to T_{padding_m} using equation (4) based on m data amounts d₁ to dₘ, m transmission rates S₁ to Sₘ, m transmission frame generation processing times t_{1_F} to t_{m_F}, the transmission time T and the SIFS time T_{SIFS}.

In this case, the calculation unit 18 calculates the padding time T_{padding_i} by substituting the data amount dᵢ (i is any value from 1 to m), the transmission speed Sᵢ, the transmission frame generation processing time t_{i_F}, the transmission time T, and the SIFS time T_{SIFS} into equation (4) for all i=1 to m, thereby calculating m padding times T_{padding_1} to T_{padding_m}.
[Math. 4] ${T}_{padding _ i} = \frac{{d}_{i}}{{S}_{i}} + {t}_{i _ F} - T - {T}_{SIFS} , i ∈ M$ (4)

In equation (4), dᵢ is the amount of data allocated to the i-th slave base station, Sᵢ is the transmission speed of the backhaul 4 between the master base station 1A and the i-th slave base station, t_{i_F} is the transmission frame generation processing time in the i-th slave base station, T is the transmission time of the notification of the transmission timing transmitted from the master base station 1A to each slave base station, T_{SIFS} is the SIFS time, and T_{padding_i} is the padding time of the i-th slave base station.

Each of the m padding times T_{padding_1} to T_{padding_m} is the length of the padding PD that is a fixed value.

Furthermore, in equation (4), when all of the n slave base stations 2-1 to 2-n are capable of executing joint transmission JT, M in equation (4) is M={i∈N|1≦i≦n}. As a result, the calculation unit 18 calculates n padding times T_{padding_1} to T_{padding_n} using equation (4).

On the other hand, in equation (4), if m slave base stations among the n slave base stations 2-1 to 2-n are capable of performing joint transmission JT, M in equation (4) is M={i∈N|1≦i≦m}. As a result, the calculation unit 18 calculates m padding times T_{padding_1} to T_{padding_m} using equation (4).

Then, the calculation unit 18 calculates m padding times T_{padding_1} to T_{padding_m} (or n padding times T_{padding_1} to T_{padding_n}), and then substitutes the m padding times T_{padding_1} to T_{padding_m} (or n padding times T_{padding_1} to T_{padding_n}) into equation (5) to calculate the required padding time T_{padding_nd}.
[Math. 5] ${T}_{padding _ nd} = max \left({T}_{padding _ 1}, {T}_{padding _ 2}, ⋯, {T}_{padding _ m}\right)$ (5)

Then, the calculation unit 18 outputs the required padding time T_{padding_nd} to the control unit 13A.

In addition, in equation (5), if the padding time T_{padding_nd} satisfies T_{padding_nd}≦0, the padding time T_{padding_nd}=0.

Furthermore, in equation (5), when there are multiple padding times that give the maximum padding time T_{padding} among the padding times T_{padding_1}, T_{padding_2}, . . . , T_{padding_m}, any one of the maximum padding times T_{padding} is set as the padding time T_{padding_nd}. The same is true when n padding times T_{padding_1} to T_{padding_n} are calculated.

When the control unit 13A receives the padding time T_{padding_nd} from the calculation unit 18, the control unit 13A outputs the notification of the transmission timing and the padding time T_{padding_nd} to the wireless unit 14, and controls the wireless unit 14 so as to transmit the notification of the transmission timing and padding PD having a length equal to the padding time T_{padding_nd} to m slave base stations by wireless communication using the channel Ch_JT.

In the second embodiment, the m slave base stations which have transmitted the response frame F_{RSP} including "JT-OK" to the master base station 1A execute the following steps (4A) to (6A) after calculating the amounts of data d₁ to dₘ to be allocated to the m slave base stations by the master base station 1A.

(4A) Each of the m slave base stations receives the notification of the transmission timing and the padding time T_{padding_nd} from the master base station 1A by wireless communication using the channel Ch_JT.

(5A) Each of the m slave base stations executes receiving transmission data from the master base station 1A via the backhaul 4 in parallel with the "reception of padding time T_{padding_nd}" in (4A).

(6A) Each of the m slave base stations executes the transmission frame generation process in parallel with the "reception of padding time T_{padding_nd}" of (4A).

Here, (4A) is executed in response to the above-mentioned "(1A) the master base station 1A transmits the notification of the transmission timing and the padding PD having a length equal to the padding time to m slave base stations by wireless communication using the channel Ch_JT." Also, (5A) is executed in response to the above-mentioned "(2A) the master base station 1A transmits m pieces of transmission data, each having a data amount of m, to m slave base stations via the backhaul 4 in parallel with the 'transmission of padding PD' in (1A)." Furthermore, (6A) is executed in response to the above-mentioned "(3A) the master base station 1A and m slave base stations perform the transmission frame generation process in parallel with the 'transmission of padding PD' in (1A)."

FIG. 15 is a schematic diagram showing frame processing in the communication system 10A shown in Fig. 12. Note that FIG. 15 shows frame processing in the communication system 10A in the case where there is one slave base station.

With referring to FIG. 15, the master base station 1A receives the response frame F_{RSP} from the slave base station 2-1 by wireless communication using the channel CH_JT.

Then, when the control unit 13A of the master base station 1A judges based on the response frame F_{RSP} that joint transmission JT with the slave base station 2-1 is possible, the generating unit 15 of the master base station 1A calculates the amount of data d₁ to be allocated to the slave base station 2-1.

Thereafter, the calculation unit 18 of the master base station 1A uses the data amount d₁ calculated by the generating unit 15 to calculate the padding time T_{padding_nd} by the above-mentioned method.

Then, (1A) the master base station 1A executes transmitting the "notification of transmission timing" and the "padding PD having a length equal to the padding time T_{padding_nd}" to the slave base station 2-1 by wireless communication using the channel Ch_JT, (2A) The master base station 1A distributes the transmission data d_{1_trsm} (=transmission data having a data amount d₁) to the slave base station 2-1 via the backhaul 4 in parallel with the transmission of the padding PD in (1A), and (3A) The master base station 1A and the slave base station (=slave base station 2-1) execute the transmission frame generation process in parallel with the transmission of the padding PD in (1A).

In addition, in (1A), after the master base station 1A transmitted the "notification of transmission timing" by wireless communication using channel Ch_JT, the master base station 1A transmits a "padding PD having a length of padding time T_{padding_nd}" by wireless communication using channel Ch_JT.

Then, after the master base station 1A has finished transmitting the padding PD, when the transmission timing arrives, the master base station 1A and the slave base station 2-1 simultaneously transmit transmission frames F_{mst_trsm} (=PPDU0) and F_{1_trsm} (=PPDU1) to the wireless device 3 by wireless communication using channel Ch_JT in the joint transmission JT.

The rest of the explanation for FIG. 15 is the same as the explanation for FIG. 7.

According to the frame processing shown in FIG. 15, the use of radio resources can be reduced to the minimum necessary by transmitting the "notification of transmission timing" and the padding PD. This is because the padding time T_{padding_nd} is calculated as the minimum necessary time by the above-mentioned method.

Furthermore, according to the frame processing shown in FIG. 15, the master base station 1A transmits padding PD having a length consisting of the padding time T_{padding_nd} to the slave base station 2-1. Therefore, it is possible to prevent wireless devices of other BSSs (Basic Service Sets) from obtaining a transmission opportunity by CSMA/CA and performing wireless communication until the master base station 1A and the slave base station 2-1 transmit transmission frames F_{mst_trsm} (=PPDU0) and F_{1_trsm} (=PPDU1) to the wireless device 3, respectively, by wireless communication using channel Ch_JT.

In other words, the master base station 1A and the slave base station 2-1 can secure the transmission opportunity to transmit the transmission frames F_{mst_trsm} (=PPDU0) and F_{1_trsm} (=PPDU1) to the wireless device 3, respectively, if the transmission of the padding PD is completed by that the master base station 1A transmits the padding PD having a length of the padding time T_{padding_nd} to the slave base station 2-1. In other words, the master base station 1A and the slave base station 2-1 can secure the transmission opportunity to transmit the transmission frames F_{mst_trsm} (=PPDU0) and F_{1_trsm} (=PPDU1) to the wireless device 3, respectively, when the master base station 1A finishes transmitting the padding PD (when the slave base station 2-1 finishes receiving the padding PD), without having to confirm that the wireless communication space is available by CSMA/CA.

As a result, it is possible to improve the throughput when the master base station 1A and the slave base station 2-1 transmit the transmission frames F_{mst_trsm} (=PPDU0) and F_{1_trsm} (=PPDU1) to the wireless device 3 by wireless communication using the channel Ch_JT.

A BSS is a network that consists of one base station and wireless devices within the range in which the radio wave from the one base station reaches.

FIG. 16 is another schematic diagram showing frame processing in the communication system 10A shown in FIG. 12. Note that FIG. 16 shows frame processing in the communication system 10A in the case where there are two slave base stations.

Referring to FIG. 16, the master base station 1A transmits the RTS to the slave base stations 2-1 and 2-2 and the wireless device 3 by wireless communication using the channel Ch_JT.

Then, the master base station 1A receives the CTS from the wireless device 3 by wireless communication using the channel Ch_JT.

Thereafter, the master base station 1A transmits a confirmation frame F_{S_PB} to the slave base stations 2-1 and 2-2 by wireless communication using the channel Ch_JT.

The slave base stations 2-1 and 2-2 receive the confirmation frame F_{S_PB} from the master base station 1A by wireless communication using the channel Ch_JT.

Then, each of the slave base stations 2-1 and 2-2 judges whether or not the joint transmission JT is possible using the method described above, and creates the response frame F_{RSP} including "JT_OK" or "JT_NG".

Then, the slave base stations 2-1 and 2-2 transmit the response frame F_{RSP} to the master base station 1A by wireless communication using the channel Ch_JT.

The master base station 1A then receives two response frames F_{RSP_1} and F_{RSP_2} from the two slave base stations 2-1 and 2-2, respectively, by wireless communication using the channel Ch_JT.

The master base station 1A judges whether or not joint transmission JT with the slave base station 2-1 is possible based on the response frame F_{RSP_1}, and judges whether or not joint transmission JT with the slave base station 2-2 is possible based on the response frame F_{RSP_2}.

When the master base station 1A judges that joint transmission JT with the two slave base stations 2-1 and 2-2 is possible, the master base station 1A calculates the data amounts d₁ and d₂ by the method described above.

After that, the master base station 1A calculates the padding time T_{padding_nd} using the data amounts d₁ and d₂ by the above-mentioned method.

In this case, the maximum padding time between the padding time T_{padding_2_1} calculated for the slave base station 2-1 and the padding time T_{padding_2_2} calculated for the slave base station 2-2 is calculated as the padding time T_{padding_nd} (see equation (5)).

When the padding time T_{padding_2_1} is the same as the padding time T_{padding_2_2}, the master base station 1A sets any one of the padding times T_{padding_2_1} and T_{padding_2_2} as the padding time T_{padding_}nd.

After calculating the padding time T_{padding_nd}, the master base station 1A executes (1A) the master base station 1A transmits the "notification of transmission timing" and a "padding PD having a length equal to the padding time T_{padding_nd}" to the slave base stations 2-1 and 2-2 by wireless communication using the channel Ch_JT, (2A) the master base station 1A distributes the transmission data d_{1_trsm} and d_{2_trsm} to the slave base stations 2-1 and 2-2, respectively, via the backhaul 4 in parallel with the transmission of the padding PD in (1A), and (3A) the master base station 1A and the slave base stations 2-1 and 2-2 perform processing for generating a transmission frame in parallel with the transmission of the padding PD in (1A).

Then, when the "transmission of padding PD" is completed, the master base station 1A, the slave base station 2-1 and the slave base station 2-2 simultaneously transmit transmission frames F_{mst_trsm} (PPDU0), F_{1_trsm} (PPDU1) and F_{2_trsm} (PPDU2) to the wireless device 3, respectively, by wireless communication using channel Ch_JT in the joint transmission JT.

Then, the wireless device 3 receives the transmission frame F_{mst_trsm} (PPDU0) from the master base station 1A by wireless communication using the channel Ch_JT, receives the transmission frame F_{1_trsm} (PPDU1) from the slave base station 2-1 by wireless communication using the channel Ch_JT, and receives the transmission frame F_{2_trsm} (PPDU2) from the slave base station 2-2 by wireless communication using the channel Ch_JT.

Then, the wireless device 3 transmits the block Ack to the master base station 1A by wireless communication using the channel Ch_JT.

Then, the master base station 1A receives the block Ack from the wireless device 3 by wireless communication using channel Ch_JT, and detects that the wireless device 3 has received the transmission frames F_{mst_trsm} (PPDU0), F_{1_trsm} (PPDU1), and _{F2_trsm} (PPDU2) by joint transmission JT with the slave base stations 2-1 and 2-2.

According to the frame processing shown in FIG. 16, even when the transmission frames F_{mst_trsm} (PPDU0), F_{1_trsm} (PPDU1), and F_{2_trsm} (PPDU2) are transmitted to the wireless device 3 by the joint transmission JT of the master base station 1A, the slave base station 2-1, and the slave base station 2-2, the use of wireless resources can be kept to a necessary minimum by "the notification of transmission timing" and "the transmitting of padding PD".

Furthermore, according to the frame processing shown in FIG. 16, the master base station 1A transmits padding PD having a length consisting of the padding time T_{padding_nd} to the slave base stations 2-1 and 2-2, so that it is possible to prevent wireless devices of other BSSs from obtaining the transmission opportunity by CSMA/CA and performing wireless communication before the master base station 1A and the slave base stations 2-1 and 2-2 transmit transmission frames F_{mst_trsm} (PPDU0), F_{1_trsm} (PPDU1), and F_{2_trsm} (PPDU2) to the wireless device 3, respectively, by wireless communication using channel Ch_JT.

In other words, the master base station 1A and the slave base stations 2-1, 2-2 do not allow wireless devices of other BSSs to obtain the transmission opportunity using CSMA/CA by that the master base station 1A transmitting the padding PD having a length consisting of the padding time T_{padding_nd} to the slave base stations 2-1, 2-2. Therefore, once the master base station 1A finishes transmitting the padding PD (i.e., once the slave base stations 2-1, 2-2 finish receiving the padding PD), the master base station 1A and the slave base stations 2-1, 2-2 can each secure the transmission opportunity to transmit the transmission frames F_{mst_trsm} (PPDU0), F_{1_trsm} (PPDU1), and F_{2_trsm} (PPDU2) to the wireless device 3 by CSMA/CA.

The reason is as follows: since the padding time T_{padding_i} in each slave base station is calculated so as to be proportional to the amount of transmission data dᵢ transmitted by each slave base station (see formula (4)), and the necessary padding time T_{padding_nd} is the maximum padding time between the padding time T_{padding_1} in the slave base station 2-1 and the padding time T_{padding_2} in the slave base station 2-2, and this is because it is possible to prevent wireless devices of other BSSs from obtaining the transmission opportunity by CSMA/CA and performing wireless communication until the required padding time T_{padding_nd} ends (i.e., until the transmission of the padding PD ends).

As a result, it is possible to improve the throughput when the master base station 1A and the slave base stations 2-1 and 2-2 transmit the transmission frames F_{mst_trsm} (PPDU0), F_{1_trsm} (PPDU1), and F_{2_trsm} (PPDU2) to the wireless device 3, respectively, by wireless communication using the channel Ch_JT.

In FIG. 15, the frame processing has been described for the case where there is one slave base station, and in FIG. 16, the frame processing has been described for the case where there are two slave base stations.

As a result, since the addition of one slave base station changes the number of confirmation frames F_{S_PB}, the number of response frames F_{RSP}, the calculation of the amount of data to be allocated to the slave base stations, the calculation of the padding time T_{padding_nd}, the distribution of transmission data to the slave base stations, and the number of transmission frames PPDU, if frame processing for the case where there is one slave base station and frame processing for the case where there are two slave base stations are explained, frame processing can generally be performed in the same manner as that shown in FIG. 16 even when there are m slave base stations capable of joint transmission JT.

FIGS. 17 and 18 are first and second flowcharts, respectively, for explaining the operation of the communication system 10A shown in FIG. 12.

The flowcharts shown in FIGS. 17 and 18 are similar to the flowcharts shown in FIGS. 10 and 11 except that step S17 is added to the flowchart shown in FIG. 10, step S11 in the flowchart shown in FIG. 10 is changed to step S18, and step S12 in FIG. 11 is changed to step S12A.

Referring to FIG. 17, when the operation of the communication system 10A is started, the above-mentioned steps S1 to S9 are executed sequentially.

Then, if it is judged in step S9 that the joint transmission JT is possible, the above-mentioned step S10 is executed.

After step S10, the calculation unit 18 of the master base station 1A calculates the necessary padding time T_{padding_nd} by the above-mentioned method (step S17).

Thereafter, (1A) the master base station 1A transmits the notification of transmission timing and the padding PD having a length consisting of the padding time T_{padding_nd} to the slave base stations (= the m slave base stations) via in-band (= via wireless communication using the same channel as the channel when the master base station and each of the m slave base stations transmit data to the wireless device), (2A) The master base station 1A distributes transmission data to the slave base stations (=m slave base stations) via the backhaul 4 in parallel with the transmission of the padding PD in (1A), and (3A) The master base station 1A and the slave base stations (=m slave base stations) perform the transmission frame generation process in parallel with the transmission of the padding PD in (1A) (step S18).

After step S18, the operation of the communication system 10A proceeds to step S12A shown in FIG. 18.

Referring to FIG. 18, after the step S18 in FIG. 17, when the padding time ends (when the master base station 1A completes transmission of the padding PD and the slave base stations (= the m slave base stations) complete reception of the padding PD), the master base station 1A and the slave base stations (= the m slave base stations) simultaneously transmit transmission data to the wireless device 3 by wireless communication using the channel Ch_JT at the transmission timing (step S12A).

Thereafter, the above-mentioned steps S13 to S15 are executed sequentially, and the operation of the communication system 10A is completed.

On the other hand, when it is judged in step S9 of FIG. 17 that the joint transmission JT is not possible, the operation of communication system 10A proceeds to step S16 shown in FIG. 18, and the above-mentioned steps S16, "YES" of the step S17, the step S14 and the step S15 are executed sequentially, and the operation of communication system 10A is terminated, or the above-mentioned steps S16 and "NO" of the step S17 are executed sequentially, and the operation of communication system 10A is terminated.

FIG. 19 is a flowchart for explaining the detailed operation of step S17 in FIG. 17.

Referring to FIG. 19, after the step S10 in FIG. 17, the calculation unit 18 of the master base station 1A receives m data amounts d₁ to dₘ, m transmission rates S₁ to Sₘ, m transmission frame generation processing times t_{1_F} to t_{m_F}, the transmission time T and the SIFS time T_{SIFS} from the control unit 13A (step S171).

Then, the calculation unit 18 sets i=1 (step S172), where i is an argument indicating each of the m slave base stations 2-1 to 2-m, and i=1 to m.

After the step S172, the calculation unit 18 calculates the padding time T_{padding_i} by substituting the data amount dᵢ, transmission rate Sᵢ, transmission frame generation processing time t_{i_F}, transmission time T and SIFS time T_{SIFS} of the slave base station 2-i into the equation (4) (step S173).

Then, the calculation unit 18 judges whether or not i=m (step S174).

When it is judged in step S174 that i is not equal to m, the calculation unit 18 sets i=i+1 (step S175).

Thereafter, the operation of the calculation unit 18 proceeds to the step S173, and the steps S173 to S175 are repeatedly executed until it is judged in step S174 that i=m.

Then, when it is judged in the step S174 that i=m, the calculation unit 18 substitutes the m padding times T_{padding_1} to T_{padding_m} into equation (5) to calculate the necessary padding time T_{padding_nd} (step S176).

Here, the necessary padding time T_{padding_nd} is the maximum padding time among the m padding times T_{padding_1} to T_{padding_m}.

After the step S176, the operation of the communication system 10A proceeds to the step S18 in FIG. 17.

In addition, in the above-mentioned embodiment 2, in step S18 of FIG. 17, (2A) may not have to be executed in parallel with the transmission of the padding PD of (1A), and (3A) may not have to be executed in parallel with the transmission of the padding PD of (1A).

Even if (2A) and (3A) are not executed in parallel with the transmission of the padding PD in (1A), if the master base station 1A executes distribution of the transmission data to the slave base stations (= m slave base stations) via the backhaul 4, the amount of wireless resources used can be reduced compared to the case where the transmission data is distributed to the slave base stations (= m slave base stations) by wireless communication, and the throughput can be improved when transmitting the transmission frames F_{mst_trsm}, F_{1_trsm} to F_{m_trsm} from the master base station 1A and the m slave base stations to the wireless device 3.

### (Example 2)

When data is transmitted to the wireless device 3 using one master base station and two slave base stations A and B, the total amount of data transmitted to the wireless device 3, the wireless transmission speed at one master base station, the wireless transmission speeds at the two slave base stations A and B, the backhaul transmission speed, the frame generation processing time, the transmission time of the frame transmitting notification of the transmission timing, and the SIFS time are shown in Table 2.

**[Table 2]**

| | MASTER BASE STATION | SLAVE BASE STATION A | SLAVE BASE STATION B |
|---|---|---|---|
| WIRELESS TRANSMISSION SPEED | 4.0[Gbps] | 2.7[Gbps] | 3.3[Gbps] |
| BACKHAUL TRANSMISSION SPEED | ------- | 5[Gbps] | 5[Gbps] |
| FRAME GENERATION PROCESSING TIME | -------- | 125[*µ* sec] | 105[*µ* sec] |
| TRANSMISSION TIME OF FRAME TRANSMITTING NOTIFICATION OF TRANSMISSION TIME | -------- | 40[*µ* sec] | 40[*µ* sec] |
| SIFS TIME | ------- | 16[*µ* sec] | 16[*µ* sec] |
| TOTAL AMOUNT OF DATA | | 250[Kbyte] | |

When the amount of data to be allocated to the slave base stations A and B is calculated using the total data amount and wireless transmission rate shown in Table 2, the amount of data d₁ to be allocated to the slave base station A is 67.5×10³ [bytes] as described above (see formula (2)), and the amount of data d₂ to be allocated to the slave base station B is 82.5×10³ [bytes] (see formula (3)). The amount of data allocated to the master base station is 100 [Kbytes], as described above.

Next, the padding time T_{padding_A} of the slave base station A is calculated as shown in equation (6), and the padding time T_{padding_B} of the slave base station B is calculated as shown in equation (7).
[Math. 6] $\begin{matrix}{T}_{padding _ A} = \frac{67.5 \times {10}^{3} \times 8}{5 \times {10}^{9}} + 125 \times {10}^{- 6} - 40 \times {10}^{- 6} - 16 \times {10}^{- 6} \\ = 177 \times {10}^{- 6} \left[sec\right]\end{matrix}$ (6)
[Math. 7] $\begin{matrix}{T}_{padding _ B} = \frac{82.5 \times {10}^{3} \times 8}{5 \times {10}^{9}} + 105 \times {10}^{- 6} - 40 \times {10}^{- 6} - 16 \times {10}^{- 6} \\ = 181 \times {10}^{- 6} \left[sec\right]\end{matrix}$ (7)

Then, the necessary padding time T_{padding_nd} is calculated as shown in equation (8).
[Math. 8] ${T}_{padding _ nd} = max \left({T}_{padding _ A}, {T}_{padding _ B}\right) = 181 \times {10}^{- 6} \left[sec\right] = 181 \left[μsec\right]$ (8)

In equation (6) and equation (7), the backhaul transmission speed (5×10⁹ [bps]), the transmission time of the notification of the transmission timing transmitted from the master base station to each slave base station (40×10⁻⁶ [bps]), and the SIFS time (16×10⁻⁶ [sec]) are the same.

The amount of data allocated to the slave base station A is 67.5×10³ [bytes], and the amount of data allocated to the slave base station B is 82.5×10³ [bytes].

The frame generation processing time of the slave base station A is 125×10⁻⁶ [sec], and the frame generation processing time of the slave base station B is 105×10⁻⁶ [sec].

Then, the first term on the right side of equation (6) becomes 108×10⁻⁶ [sec], and the first term on the right side of equation (7) becomes 132×10⁻⁶ [sec].

108×10⁻⁶ [sec] is the transmission time when transmitting transmission data having a data amount of 67.5×10³ [bytes] from the master base station to the slave base station A via the backhaul 4, and 132×10⁻⁶ [sec] is the transmission time when transmission data with a data amount of 82.5×10³ [bytes] is transmitted from the master base station to the slave base station B via the backhaul 4.

Furthermore, the difference (=24×10⁻⁶ [sec]) between the transmission time of the transmission data to slave base station B (=132×10⁻⁶ [sec]) and the transmission time of the transmission data to slave base station A (=108×10⁻⁶ [sec]) is greater than the difference (=20×10⁻⁶ [sec]) between the frame generation processing time of slave base station A (=125×10⁻⁶ [sec]) and the frame generation processing time of slave base station B (=105×10⁻⁶ [sec]).

As a result, the padding time T_{padding_B} (=181×10⁻⁶ [sec]) of the slave base station B is greater than the padding time T_{padding_A} (=177×10⁻⁶ [sec]) of the slave base station A.

Therefore, the necessary padding time T_{padding_nd} consists of the padding time T_{padding_B} (=181 [µsec]) of the slave base station B.

In this way, by calculating the amounts of data d_{A} and d_{B} to be allocated to the slave base stations A and B using equation (1), and by calculating the required padding time T_{padding_nd} using equations (4) and (5), it has been found that the transmission opportunity to transmit by wireless communication using channel Ch_JT can be secured until all of the master base station and the slave base stations A and B start transmitting the transmission frame PPDU.

Other aspects of the second embodiment are the same as those of the first embodiment.

In the above, it has been explained that the channel Ch_JT is made up of one channel, but in the embodiment of the present invention, the channel Ch_JT may be made up of the channels Ch_JT_CMM shown below.

FIG. 20 is a diagram showing an example of the configuration of the channel Ch_JT_CMM. FIG. 20 shows an example of the configuration of the channel ChJT_CMM when the maximum bandwidth is 320 MHz in the 6 GHz band.

Referring to FIG. 20, the conditions for performing the joint transmission JT using the channel Ch_JT_CMM are that the wireless device 3 which is the destination terminal is under the control of the master base station 1 (or master base station 1A) as a prerequisite and that the following (I) to (IV) are satisfied.

Note that "being associated" means that a base station and a wireless device are in a state in which they can transmit and receive data to and from each other in a wireless LAN.
(I) The primary channel Ch_PR_WD (=45ch) of the wireless device 3 is the same as the primary channel Ch_PR_MBS (=45ch) of the master base station 1 (or the master base station 1A).
(II) The secondary channel Ch_SC_WD (=33ch, 37ch, 41ch, 49ch, 53ch, 57ch, 61ch) of the wireless device 3 is within the range of the secondary channel Ch_SC_MBS (=33ch, 37ch, 41ch, 49ch, 53ch, 57ch, 61ch) of the master base station 1 (or the master base station 1A).
(III) The primary channel Ch_PR_SV (=33ch, 45ch, 61ch) of the slave base stations 2-1, 2-2, 2-3, 2-4 is within the range of the primary channel Ch_PR_WD (=45ch) of the wireless device 3 or within the range of the secondary channel Ch_SC_WD (=33ch, 37ch, 41ch, 49ch, 53ch, 57ch, 61ch).
(IV) When the primary channel Ch_PR_WD (=45ch) of the wireless device 3 is different from the primary channel Ch_PR_SV (=33ch, 61ch) of the slave base stations 2-1 and 2-2, the primary channel Ch_PR_WD (=45ch) of the wireless device 3 is within the range of the secondary channel Ch_SC_SV (=37ch to 57ch) of the slave base stations 2-1 and 2-2.

And the channel Ch_JT_CMM consists of channels that are "part of the common part of the 'combination of primary channel and secondary channel' or part of the widest channel of the common part including the primary channel, under the condition that the primary channels of all base stations and wireless device are included" among the master base station, slave base station and wireless device participating in the joint transmission JT.

When performing joint transmission JT, the master base station 1 (or the master base station 1A) transmits information of a channel Ch_JT_CMM1 configured as the common portion among a combination of the primary channel Ch_PR_WD (=45ch) and the secondary channel Ch_SC_WD (=1ch to 41ch, 49ch to 61ch) of the wireless device 3, a combination of the primary channel Ch_PR_SV (=33ch) and the secondary channel Ch_SC_SV (=37ch to 61ch) of the slave base station 2-1, a combination of the primary channel Ch_PR_SV (=61ch) and the secondary channel Ch_SC_SV (=33ch to 57ch) of the slave base station 2-2, a combination of the primary channel Ch_PR_SV (=ch45) and the secondary channel Ch_SC_SV (=ch1-ch41, ch49-ch61) of the slave base station 2-3, and a combination of the primary channel Ch_PR_SV (=45ch) and the secondary channel Ch_SC_SV (=33ch to 41ch, 49ch to 93ch) of the slave base station 2-4 to the destination terminal (=wireless device 3) and slave base stations 2-1 to 2-4 on the channel Ch_JT_CMM1.

The wireless device 3 is equipped with an antenna capable of receiving frames transmitted on channels 33ch to 61ch that are configured as the channel Ch_JT_CMM1. Then, the wireless device 3 receives the information of the channel Ch_JT_CMM1 from the master base station 1 (or the master base station 1A) on the channel Ch_JT_CMM1.

Each of the slave base stations 2-1 to 2-4 receives the information of the channel Ch_JT_CMM1 from the master base station 1 (or the master base station 1A) on the channel Ch_JT_CMM1.

A transmission method in which the master base station 1 (or the master base station 1A) and the slave base station 2-1 transmit a transmission frame to the wireless device 3 by joint transmission JT is shown in Table 3.

**[Table 3]**

| | MASTER BASE STATION 1(OR 1A) | SLAVE BASE STATION 2-1 |
|---|---|---|
| (1) | PRIMARY CHANNEL (45ch) +SECONDARY CHANNEL (33ch TO 41ch) | PRIMARY CHANNEL (33ch) +SECONDARY CHANNEL (37ch TO 45ch) |
| (2) | PRIMARY CHANNEL (45ch) +SECONDARY CHANNEL (33ch TO 41ch, 49ch TO 61ch) | PRIMARY CHANNEL (33ch) +SECONDARY CHANNEL (37ch TO 61ch) |

In Table 3, in transmission method (1), the master base station 1 (or the master base station 1A) transmits the transmission frame F_{mst_trsm} (=PPDU0) to the wireless device 3 on the primary channel (ch45) and the secondary channels (ch33 to ch41), and the slave base station 2-1 transmits the transmission frame F_{1_trsm} (=PPDU1) to the wireless device 3 on the primary channel (ch33) and the secondary channels (ch37 to ch45).

In addition, in Table 3, in transmission method (2), the master base station 1 (or the master base station 1A) transmits a transmission frame F_{mst_trsm} (=PPDU0) to the wireless device 3 on the primary channel (45ch) and the secondary channels (33ch to 41ch, 49ch to 61ch), and the slave base station 2-1 transmits the transmission frame F_{1_trsm} (=PPDU1) to the wireless device 3 on the primary channel (33ch) and secondary channels (37ch to 61ch).

As a result, the transmission method (2) uses a wider bandwidth than the transmission method (1), and therefore can transmit a transmission frame to the wireless device 3 faster than the transmission method (1).

In FIG. 20, since the primary channel (45ch) of the master base station 1 (or master base station 1A) is different from the primary channel (33ch) of the slave base station 2-1, the four channels (33ch, 37ch, 41ch, 45ch) in the common portion including both the primary channel (45ch) of the master base station 1 (or master base station 1A) and the primary channel (33ch) of the slave base station 2-1 are configured as channel Ch_JT_CMM1.

A transmission method in which the master base station 1 (or the master base station 1A) and the slave base station 2-2 transmit a transmission frame to the wireless device 3 by the joint transmission JT is shown in Table 4.

**[Table 4]**

| | MASTER BASE STATION 1(OR 1A) | SLAVE BASE STATION 2-2 |
|---|---|---|
| (1) | PRIMARY CHANNEL (45ch) +SECONDARY CHANNEL (33ch TO 41ch, 49ch TO 61ch) | PRIMARY CHANNEL (61ch) +SECONDARY CHANNEL (33ch TO 57ch) |

In Table 4, a transmission method (1) is a method in which the master base station 1 (or the master base station 1A) transmits a transmission frame F_{mst_trsm} (=PPDU0) to the wireless device 3 on the primary channel (45ch) and the secondary channels (33ch to 41ch, 49ch to 61ch) and in which the slave base station 2-2 transmits a transmission frame F_{2_trsm} (=PPDU2) to the wireless device 3 on the primary channel (ch61) and the secondary channels (ch33 to ch57).

In FIG. 20, since the primary channel (45ch) of the master base station 1 (or master base station 1A) is different from the primary channel (61ch) of the slave base station 2-2, the eight channels (33ch, 37ch, 41ch, 45ch, 49ch, 53ch, 57ch, 61ch) in the common portion including both the primary channel (45ch) of the master base station 1 (or master base station 1A) and the primary channel (61ch) of the slave base station 2-2 are configured as channel Ch_JT_CMM1.

It is noted that, when using microwaves, anyone of one channel (bandwidth 20 MHz), two channels (bandwidth 40 MHz), four channels (bandwidth 80 MHz), eight channels (bandwidth 160 MHz) or sixteen channels (bandwidth 320 MHz) can be used.

A transmission method in which the master base station 1 (or the master base station 1A) and the slave base stations 2-3 transmit a transmission frame to the wireless device 3 by joint transmission JT is shown in Table 5.

**[Table 5]**

| | MASTER BASE STATION 1(OR 1A) | SLAVE BASE STATION 2-3 |
|---|---|---|
| (1) | PRIMARY CHANNEL (45ch) | PRIMARY CHANNEL (45ch) |
| (2) | PRIMARY CHANNEL (45ch) +SECONDARY CHANNEL (41ch) | PRIMARY CHANNEL (45ch) +SECONDARY CHANNEL(41ch) |
| (3) | PRIMARY CHANNEL (45ch) +SECONDARY CHANNEL (33ch TO 41ch) | PRIMARY CHANNEL (45ch) +SECONDARY CHANNEL (33ch TO 41ch) |
| (4) | PRIMARY CHANNEL (45ch) +SECONDARY CHANNEL (33ch TO 41ch) +SECONDARY CHANNEL (49ch TO 61ch) | PRIMARY CHANNEL (45ch) +SECONDARY CHANNEL (33ch TO 41ch) +SECONDARY CHANNEL (49ch TO 61ch) |
| (5) | PRIMARY CHANNEL (45ch) +SECONDARY CHANNEL (1ch TO 41ch) +SECONDARY CHANNEL (49ch TO 61ch) | PRIMARY CHANNEL (45ch) +SECONDARY CHANNEL (1ch TO 41ch) +SECONDARY CHANNEL (49ch TO 61ch) |

In Table 5, a transmission method (1) is a method in which the master base station 1 (or the master base station 1A) transmits the transmission frame F_{mst_trsm} (=PPDU0) to the wireless device 3 on the primary channel (45ch) and the slave base station 2-3 transmits the transmission frame F_{3_trsm} (=PPDU3) to the wireless device 3 on the primary channel (45ch).

Also, in Table 5, a transmission method (2) is a method in which the master base station 1 (or the master base station 1A) transmits the transmission frame F_{mst_trsm} (=PPDU0) to the wireless device 3 on the primary channel (45ch) and the secondary channel (41ch) and the slave base station 2-3 transmits the transmission frame F_{3_trsm} (=PPDU3) to the wireless device 3 on the primary channel (45ch) and the secondary channel (41ch).

Furthermore, in Table 5, a transmission method (3) is a method in which the master base station 1 (or the master base station 1A) transmits the transmission frame F_{mst_trsm} (=PPDU0) to the wireless device 3 on the primary channel (45ch) and the secondary channel (33ch to 41ch), and the slave base station 2-3 transmits the transmission frame F_{3_trsm} (=PPDU3) to the wireless device 3 on the primary channel (45ch) and the secondary channel (33ch to 41ch).

Furthermore, in Table 5, a transmission method (4) is a method in which the master base station 1 (or the master base station 1A) transmits the transmission frame F_{mst_trsm} (=PPDU0) to the wireless device 3 on the primary channel (45ch) and secondary channel (33ch to 41ch, 49ch to 61ch) and the slave base station 2-3 transmits the transmission frame F_{3_trsm} (=PPDU3) to the wireless device 3 on the primary channel (45ch) and secondary channel (33ch to 41ch, 49ch to 61ch).

Furthermore, in Table 5, a transmission method (5) is a method in which the master base station 1 (or the master base station 1A) transmits the transmission frame _{Fmst_trsm} (=PPDU0) to the wireless device 3 on the primary channel (45ch) and secondary channel (1ch to 41ch, 49ch to 61ch), and the slave base station 2-3 transmits the transmission frame F_{3_trsm} (=PPDU3) to the wireless device 3 on the primary channel (45ch) and secondary channel (1ch to 41ch, 49ch to 61ch).

Here, in FIG. 20, the channel Ch_JT_CMM1 is shown as consisting of channel 33ch to channel 61ch, but when the transmission method (5) is used, the channel Ch_JT_CMM1 consists of the common portion (= 1ch to 61ch) of channels 1ch to 61ch of the master base station 1 (or master base station 1A) and channels 1ch to 61ch of the slave base station 2-3.

In FIG. 20, since the primary channel (45ch) of the master base station 1 (or the master base station 1A) is the same as the primary channel (45ch) of the slave base station 2-3, there are a transmission method (1) in which the master base station 1 (or the master base station 1A) and the slave base station 2-3 transmit transmission frames using one channel 45ch, a transmission method (2) in which the master base station (or the master base station 1A) and the slave base station 2-3 transmit transmission frames using two channels 41ch and 45ch, a transmission method (3) in which the master base station (or the master base station 1A) and the slave base station 2-3 transmit transmission frames using four channels 33ch, 37ch, 41ch, and 45ch, a transmission method (4) in which the master base station 1 (or the master base station 1A) and the slave base stations 2-3 transmit transmission frames using eight channels 33ch, 37ch, 41ch, 45ch, 49ch, 53ch, 57ch, and 61ch, and a transmission method (5) in which the master base station 1 (or the master base station 1A) and the slave base stations 2-3 transmit transmission frames using 16 channels 1ch, 5ch, 9ch, 13ch, 17ch, 21ch, 25ch, 29ch, 33ch, 37ch, 41ch, 45ch, 49ch, 53ch, 57ch, and 61ch.

Therefore, in Table 5, since the transmission method (2) uses a wider bandwidth than the transmission method (1), and the transmission method (2) can transmit a transmission frame to the wireless device 3 faster than the transmission method (1), since the transmission method (3) uses a wider bandwidth than the transmission method (2), the transmission method (3) can transmit the transmission frame to the wireless device 3 faster than the transmission method (2), since the transmission method (4) uses a wider bandwidth than the transmission method (3), the transmission method (4) can transmit the transmission frame to the wireless device 3 faster than the transmission method (3), and since the transmission method (5) uses a wider bandwidth than the transmission method (4), the transmission method (5) can transmit the transmission frame to the wireless device 3 faster than the transmission method (4).

A transmission method in which the master base station 1 (or the master base station 1A) and the slave base stations 2-3 and 2-4 transmit a transmission frame to the wireless device 3 by joint transmission JT is shown in Table 6.

**[Table 6]**

| | MASTER BASE STATION 1(OR 1A) | SLAVE BASE STATION 2-3 | SLAVE BASE STATION 2-4 |
|---|---|---|---|
| (1) | PRIMARY CHANNEL (45ch) | PRIMARY CHANNEL (45ch) | PRIMARY CHANNEL (45ch) |
| (2) | PRIMARY CHANNEL (45ch) +SECONDARY CHANNEL (41ch) | PRIMARY CHANNEL (45ch) +SECONDARY CHANNEL (41ch) | PRIMARY CHANNEL (45ch) +SECONDARY CHANNEL (41ch) |
| (3) | PRIMARY CHANNEL (45ch) +SECONDARY CHANNEL (33ch TO 41ch) | PRIMARY CHANNEL (45ch) +SECONDARY CHANNEL (33ch TO 41ch) | PRIMARY CHANNEL (45ch) +SECONDARY CHANNEL (33ch TO 41ch) |
| (4) | PRIMARY CHANNEL (45ch) +SECONDARY CHANNEL (33ch TO 41ch) +SECONDARY CHANNEL (49ch TO 61ch) | PRIMARY CHANNEL (45ch) +SECONDARY CHANNEL (33ch TO 41ch) +PRIMARY CHANNEL (49ch TO 61ch) | PRIMARY CHANNEL (45ch) +SECONDARY CHANNEL (33ch TO 41ch) +SECONDARY CHANNEL (49ch TO 61ch) |

In Table 6, a transmission method (1) is a method in which the master base station 1 (or the master base station 1A) transmits a transmission frame F_{mst_trsm} (=PPDU0) to the wireless device 3 on the primary channel (ch45), the slave base station 2-3 transmits a transmission frame F_{3_trsm} (=PPDU3) to the wireless device 3 on the primary channel (ch45), and the slave base station 2-4 transmits a transmission frame F_{4_trsm} (=PPDU4) to the wireless device 3 on the primary channel (ch45).

In addition, in Table 6, a transmission method (2) is a method in which the master base station 1 (or the master base station 1A) transmits the transmission frame F_{mst_trsm} (=PPDU0) to the wireless device 3 on the primary channel (45ch) and the secondary channel (41ch), the slave base station 2-3 transmits the transmission frame F_{3_trsm} (=PPDU3) to the wireless device 3 on the primary channel (45ch) and the secondary channel (41ch), and the slave base station 2-4 transmits the transmission frame F_{4_trsm} (=PPDU4) to the wireless device 3 on the primary channel (45ch) and the secondary channel (41ch).

Furthermore, in Table 6, a transmission method (3) is a method in which the master base station 1 (or the master base station 1A) transmits the transmission frame F_{mst_trsm} (=PPDU0) to the wireless device 3 on the primary channel (ch45) and the secondary channels (ch33 to ch41), the slave base station 2-3 transmits the transmission frame F_{3_trsm} (=PPDU3) to the wireless device 3 on the primary channel (ch45) and the secondary channels (ch33 to ch41), and the slave base station 2-4 transmits the transmission frame F_{4_trsm} (=PPDU4) to the wireless device 3 on the primary channel (ch45) and the secondary channels (ch33 to ch41).

Furthermore, in Table 6, a transmission method (4) is a method in which the master base station 1 (or the master base station 1A) transmits a transmission frame F_{mst_trsm} (=PPDU0) to the wireless device 3 using the primary channel (45ch), the secondary channels (33ch to 41ch), and the secondary channels (49ch to 61ch), the slave base station 2-3 transmits a transmission frame F_{3_trsm} (=PPDU3) to the wireless device 3 using the primary channel (45ch), the secondary channels (33ch to 41ch), and the secondary channels (49ch to 61ch), and the slave base station 2-4 transmits the transmission frame F_{4_trsm} (=PPDU4) to the wireless device 3 using the primary channel (45ch), the secondary channels (33ch to 41ch), and the secondary channels (49ch to 61ch).

In FIG. 20, since the primary channel (45ch) of the master base station 1 (or the master base station 1A) is the same as the primary channel (45ch) of the slave base stations 2-3 and 2-4, there are a transmission method (1) in which the master base station 1 (or the master base station 1A) and the slave base stations 2-3 and 2-4 transmit the transmission frame using one channel 45ch, a transmission method (2) in which the master base station 1 (or the master base station 1A) and the slave base stations 2-3 and 2-4 transmit transmission frames using two channels 41ch and 45ch, a transmission method (3) in which the master base station 1 (or the master base station 1A) and the slave base stations 2-3 and 2-4 transmit transmission frames using four channels 33ch, 37ch, 41ch, and 45ch, and a transmission method (4) in which the master base station 1 (or the master base station 1A) and the slave base stations 2-3 and 2-4 transmit transmission frames using eight channels 33ch, 37ch, 41ch, 45ch, 49ch, 53ch, 57ch, and 61ch.

Therefore, in Table 6, since the transmission method (2) uses a wider bandwidth than the transmission method (1), the transmission method (2) can transmit the transmission frame to the wireless device 3 faster than the transmission method (1), since the transmission method (3) uses a wider bandwidth than the transmission method (2), the transmission method (3) can transmit the transmission frame to the wireless device 3 faster than the transmission method (2), and since the transmission method (4) uses a wider bandwidth than the transmission method (3), the transmission method (4) can transmit the transmission frame to the wireless device 3 faster than the transmission method (3).

A transmission method in which the master base station 1 (or the master base station 1A) and the slave base stations 2-1, 2-2, and 2-3 transmit a transmission frame to the wireless device 3 by joint transmission JT is shown in Table 7.

**[Table 7]**

| | | |
|---|---|---|
| | MASTER BASE STATION 1(OR 1A) | PRIMARY CHANNEL (45ch) +SECONDARY CHANNEL (33ch TO 41ch) +SECONDARY CHANNEL (49ch TO v61ch) |
| (1) | SLAVE BASE STATION 2-1 | PRIMARY CHANNEL (33ch) +SECONDARY CHANNEL (37ch TO 61ch) |
| | SLAVE BASE STATION 2-2 | PRIMARY CHANNEL (61ch) +SECONDARY CHANNEL (33ch TO 57ch) |
| | SLAVE BASE STATION 2-3 | PRIMARY CHANNEL (45ch) +SECONDARY CHANNEL (33ch TO 41ch) +SECONDARY CHANNEL (49ch TO 61ch) |

In Table 7, transmission method (1) is a method in which the master base station 1 (or the master base station 1A) transmits the transmission frame F_{mst_trsm} (=PPDU0) to the wireless device 3 on the primary channel (45ch), secondary channels (33ch to 41ch), and secondary channels (49ch to 61ch), the slave base station 2-1 transmits the transmission frame F_{1_trsm} (=PPDU1) to the wireless device 3 on the primary channel (33ch) and the secondary channels (37ch to 61ch), the slave base station 2-2 transmits the transmission frame F_{2_trsm} (=PPDU2) to the wireless device 3 on the primary channel (61ch) and the secondary channels (33ch to 57ch), and the slave base station 2-3 transmits the transmission frame F_{3_trsm} (=PPDU3) to the wireless device 3 on the primary channel (45ch), the secondary channels (33ch to 41ch) and the secondary channels (49ch to 61ch).

A transmission method in which the master base station 1 (or the master base station 1A) and the slave base stations 2-1 to 2-4 transmit a transmission frame to the wireless device 3 by the joint transmission JT is shown in Table 8.

**[Table 8]**

| | | |
|---|---|---|
| | MASTER BASE STATION 1(OR 1A) | PRIMARY CHANNEL (45ch) +SECONDARY CHANNEL (33ch TO 41ch) +SECONDARY CHANNEL (49ch TO 61ch) |
| | SLAVE BASE STATION 2-1 | PRIMARY CHANNEL (33ch) +SECONDARY CHANNEL (37ch TO 61ch) |
| (1) | SLAVE BASE STATION 2-2 | PRIMARY CHANNEL (61ch) +SECONDARY CHANNEL (33ch TO 57ch) |
| | SLAVE BASE STATION 2-3 | PRIMARY CHANNEL (45ch) +SECONDARY CHANNEL (33ch TO 41ch) +SECONDARY CHANNEL (49ch TO 61ch) |
| | SLAVE BASE STATION 2-4 | PRIMARY CHANNEL (45ch) +SECONDARY CHANNEL (33ch TO 41ch) +SECONDARY CHANNEL (49ch TO 61ch) |

In Table 8, transmission method (1) is a method in which the master base station 1 (or the master base station 1A) transmits the transmission frame F_{mst_trsm} (=PPDU0) to the wireless device 3 on the primary channel (45ch), secondary channels (33ch to 41ch), and secondary channels (49ch to 61ch), the slave base station 2-1 transmits the transmission frame F_{1_trsm} (=PPDU1) to the wireless device 3 on the primary channel (33ch) and the secondary channels (37ch to 61ch), the slave base station 2-2 transmits the transmission frame F_{2_trsm} (=PPDU2) to the wireless device 3 on the primary channel (61ch) and the secondary channels (33ch to 57ch), the slave base station 2-3 transmits the transmission frame F_{3_trsm} (=PPDU3) to the wireless device 3 on the primary channel (45ch), the secondary channels (33ch to 41ch) and the secondary channels (49ch to 61ch), and the slave base station 2-4 transmits the transmission frame F_{4_trsm} (=PPDU4) to the wireless device 3 on the primary channel (45ch), the secondary channels (33ch to 41ch) and the secondary channels (49ch to 61ch).

In addition, when only the master base station 1 (or the master base station 1A) transmits a transmission frame including the transmission data D_trsm to the wireless device 3 by wireless communication, the master base station 1 (or the master base station 1A) may transmit the transmission frame including the transmission data D_trsm to the wireless device 3 only using a primary channel shown in any of Tables 3 to 8, or may transmit the transmission frame including the transmission data D_trsm to the wireless device 3 using both the primary channel and the secondary channel shown in any of Tables 3 to 8.

Fig. 21 is a diagram showing another example of the configuration of the channel Ch_JT_CMM. FIG. 21 shows an example of the configuration of the channel Ch_JT_CMM when the bandwidth is 40 MHz in the 2.4 GHz band.

Referring to FIG. 21, the primary channel Ch_PR_MBS of the master base station 1 (or the master base station 1A) is channel 5ch, and the secondary channel Ch_SC_MBS of the master base station 1 (or the master base station 1A) is channel 9ch.

Further, the primary channel Ch_PR_WD of the wireless device 3 is channel 5ch, and the secondary channel Ch_SC_WD of the wireless device 3 is channel 9ch.

Furthermore, the primary channel Ch_PR_SV of the slave base station 2-1 is channel 9ch, and the secondary channel Ch_SC_SV of the slave base station 2-1 is channel 5ch.

As a result, a channel Ch_JT_CMM2 (=5ch, 9ch) satisfies the above-mentioned conditions (I) to (IV).

A transmission method in which the master base station 1 (or the master base station 1A) and the slave base station 2-1 transmit the transmission frame to the wireless device 3 by joint transmission JT is shown in Table 9.

**[Table 9]**

| | MASTER BASE STATION 1(OR 1A) | SLAVE BASE STATION 2-1 |
|---|---|---|
| (1) | PRIMARY CHANNEL (5ch) + SECONDARY CHANNEL (9ch) | PRIMARY CHANNEL (9ch) + SECONDARY CHANNEL (5ch) |

In Table 9, a transmission method (1) is a method in which the master base station 1 (or the master base station 1A) transmits a transmission frame F_{mst_trsm} (=PPDU0) to the wireless device 3 on the primary channel (5ch) and the secondary channel (9ch), and the slave base station 2-1 transmits a transmission frame F_{1_trsm} (=PPDU1) to the wireless device 3 on the primary channel (9ch) and the secondary channel (5ch).

When the master base station 1 (or master base station 1A) performs the joint transmission JT, the master base station 1 transmits information of the channel Ch_JT_CMM2 configured as the common portion (=5ch, 9ch) between a combination of the primary channel Ch_PR_WD (=5ch) and the secondary channel Ch_SC_WD (=9ch) of the wireless device 3, and a combination of the primary channel Ch_PR_SV (=9ch) and the secondary channel Ch_SC_SV (=5ch) of the slave base station 2-1 to the slave base station 2-1 and the wireless device 3 on channel Ch_JT.

The wireless device 3 is equipped with an antenna capable of receiving transmitted frames on channel Ch_JT_CMM2 (5ch, 9ch). Then, the wireless device 3 receives the information of the channel Ch_JT_CMM2 (5ch, 9ch) from the master base station 1 (or the master base station 1A) on the channel Ch_JT.

The slave base station 2-1 receives the information of the channel Ch_JT_CMM2 (5ch, 9ch) from the master base station 1 (or the master base station 1A) on the channel Ch_JT.

In the joint transmission JT, the master base station 1 (or the master base station 1A) transmits the transmission frame F_{mst_trsm} (=PPDU0) to the wireless device 3 on the primary channel 5ch and the secondary channel 9ch, and the slave base station 2-1 transmits the transmission frame F_{1_trsm} (=PPDU1) to the wireless device 3 on the primary channel 9ch and the secondary channel 5ch.

In addition, when only the master base station 1 (or the master base station 1A) transmits the transmission frame including the transmission data D_trsm to the wireless device 3 by wireless communication, the master base station 1 (or the master base station 1A) may transmit the transmission frame including the transmission data D_trsm to the wireless device 3 using the primary channel (5ch) and secondary channel (9ch) shown in Table 9.

FIG. 22 is a diagram showing yet another example of the configuration of the channel Ch_JT_CMM. FIG. 22 shows an example of the configuration of the channel ChJT_CMM when the bandwidth is 40 MHz in the 2.4 GHz band.

Referring to FIG. 22, the primary channel Ch_PR_MBS of the master base station 1 (or the master base station 1A) is channel 7ch, and the secondary channel Ch_SC_MBS of the master base station 1 (or the master base station 1A) is channel 11ch.

Further, the primary channel Ch_PR_WD of the wireless device 3 is channel 7ch, and the secondary channel Ch_SC_WD of the wireless device 3 is channel 11ch.

Furthermore, the primary channel Ch_PR_SV of the slave base station 2-1 is channel 7ch, and the secondary channel Ch_SC_SV of the slave base station 2-1 is channel 3ch.

As a result, a channel Ch_JT_CMM3 (=7ch) satisfies the above-mentioned conditions (I) to (IV).

A transmission method in which the master base station 1 (or the master base station 1A) and the slave base station 2-1 transmit a transmission frame to the wireless device 3 by the joint transmission JT is shown in Table 10.

**[Table 10]**

| | MASTER BASE STATION 1(OR 1A) | SLAVE BASE STATION 2-1 |
|---|---|---|
| (1) | PRIMARY CHANNEL (7ch) | PRIMARY CHANNEL (7ch) |

In the Table 10, a transmission method (1) is a method in which the master base station 1 (or the master base station 1A) transmits the transmission frame F_{mst_trsm} (=PPDU0) to the wireless device 3 on the primary channel (7ch), and the slave base station 2-1 transmits the transmission frame F_{1_trsm} (=PPDU1) to the wireless device 3 on the primary channel (7ch).

When the master base station 1 (or the master base station 1A) performs the joint transmission JT, the master base station 1 (or the master base station 1A) transmits information of the channel Ch_JT_CMM3 configured as the common portion (=7ch) among a combination of the primary channel Ch_PR_MBS (=7ch) and the secondary channel Ch_SC_MBS (=11ch) of the master base station 1 (or the master base station 1A), a combination of the primary channel Ch_PR_WD (=7ch) and the secondary channel Ch_SC_WD (=11ch) of the wireless device 3, and a combination of the primary channel Ch_PR_SV (=7ch) and the secondary channel Ch_SC_SV (=3ch) of the slave base station 2-1 to the slave base station 2-1 and the wireless device 3 on the channel Ch_JT.

The wireless device 3 is equipped with an antenna capable of receiving transmitted frames on the channel Ch_JT_CMM3 (7ch).

The slave base station 2-1 receives the channel Ch_JT_CMM3 (7ch) from the master base station 1 (or the master base station 1A) on the channel Ch_JT.

When the joint transmission JT is performed, the master base station 1 (or the master base station 1A) transmits the transmission frame F_{mst_trsm} (=PPDU0) to the wireless device 3 on the primary channel Ch_PR_MBS (=7ch), and the slave base station 2-1 transmits the transmission frame F_{1_trsm} (=PPDU1) to the wireless device 3 on the primary channel Ch_PR_SV (=7ch).

According to the transmission methods shown in Tables 3 to 10 above, the master base station and the slave base station transmit the transmission frame to the wireless device 3 using at least the primary channel out of the primary channel and secondary channels.

Therefore, in an embodiment of the present invention, when the channel Ch_JT_CMM is used, the master base station and the slave base station use "CSMA/CA wireless communication using at least the primary channel of the master base station and the primary channel of the slave base station" instead of "CSMA/CA wireless communication using one channel", and when the transmission timing arrives, transmit the transmission frame to the wireless device by joint transmission.

As described above, a slave base station generally consists of m slave base stations, and therefore in an embodiment of the present invention, the master base station and the m slave base stations use "wireless communication employing CSMA/CA using at least the primary channel of the master base station and m primary channels of the m slave base stations" instead of "wireless communication employing CSMA/CA using one channel", and when the transmission timing arrives, transmit (m+1) transmission frames to the wireless device by joint transmission.

FIG. 23 is a schematic diagram showing frame processing when using the channel Ch_JT_CMM.

Referring to FIG. 23, the master base station 1 transmits the RTS to the slave base station 2-1 and the wireless device 3 by wireless communication using the channel Ch_JT_CMM.

Then, the slave base station 2-1 and the wireless device 3 receive the RTS from the master base station 1 by wireless communication using the channel Ch_JT_CMM.

After that, the wireless device 3 transmits a CTS to the master base station 1 by wireless communication using the channel Ch_JT_CMM.

Then, when the master base station 1 receives a CTS from the wireless device 3 by wireless communication using the channel Ch_JT_CMM, the master base station 1 generates the confirmation frame F_{S_PB} and transmits the confirmation frame F_{S_PB} to the slave base station 2-1 by wireless communication using the channel Ch_JT_CMM.

When the slave base station 2-1 receives the confirmation frame F_{S_PB} from the master base station 1 by wireless communication using the channel Ch_JT_CMM, the slave base station 2-1 judges whether or not the joint transmission JT with the master base station 1 is possible. When the slave base station 2-1 judges that joint transmission JT with the master base station 1 is possible, the slave base station 2-1 generates the response frame F_{RSP} including "JT_OK", and when the slave base station 2-1 judges that joint transmission JT with the master base station 1 is not possible, the slave base station 2-1 generates the response frame FRSP including "JT_NG".

The slave base station 2-1 then transmits the response frame F_{RSP} (=the response frame FRSP including "JT_OK" or "JT_NG") to the master base station 1 in response to the confirmation frame F_{S_PB} by wireless communication using the channel Ch_JT_CMM.

The master base station 1 receives the response frame F_{RSP} from the slave base station 2-1 by wireless communication using the channel Ch_JT_CMM.

Then, when the master base station 1 judges that the joint transmission JT is possible based on the response frame F_{RSP} (response frame F_{RSP} including "JT_OK"), the master base station 1 calculates the amounts dₘₛₜ and d₁ of data to be allocated to the master base station 1 and the slave base station 2-1, respectively.

After that, the master base station 1 executes the following steps (1) to (3).
(1) The master base station 1 executes transmitting a "notification of transmission timing" to the slave base station 2-1 by wireless communication using the channel Ch_JT_CMM,
(2) The master base station 1 executes distributing the transmission data d_{1_trsm} (the transmission data having a data amount d₁) to the slave base station 2-1 via the backhaul 4 in parallel with (1), and (3) The master base station 1 and the slave base station 2-1 execute processing for generating a transmission frame in parallel with (1).

In this case, (2) above is executed earliest in time, (1) above is executed in parallel with (2), and (3) above is executed in parallel with (1) after (2) is completed. As a result, the time required for distributing transmission data (2) in the master base station 1 partially overlaps with the time required for transmitting the transmission timing notification (1), and the time required for generating a transmission frame (3) in the master base station 1 and the slave base station 2-1 partially overlaps with the time required for transmitting the transmission timing notification (1).

The distribution of transmission data in the master base station 1 (2) and the process of generating transmission frames in the master base station 1 and the slave base station 2-1 (3) are executed in series.

Here, (2) the master base station 1 executes in parallel with (1) the distribution of transmission data d_{1_trsm} (transmission data having the data amount d₁) to the slave base station 2-1 via the backhaul 4, which means that the time required to distribute the transmission data d_{1_trsm} (transmission data having the data amount d₁) to the slave base station 2-1 and the time required to send the notification of the transmission timing in (1) overlap for at least a portion of the time length.

In addition, (3) the master base station 1 and the slave base station 2-1 perform the transmission frame generation process in parallel with (1), which means that the time required for the transmission frame generation process and the time required to send the notification of the transmission timing in (1) overlap for at least a portion of the time.

After the process of generating the transmission frame is completed, the master base station 1 and the slave base station 2-1 simultaneously transmit transmission frames F_{mst_trsm} (=PPDU0) and F_{1_trsm} (=PPDU1) to the wireless device 3, respectively, by wireless communication using channel Ch_JT_CMM in the joint transmission JT.

Then, when the wireless device 3 has received the transmission frame F_{mst_trsm} (=PPDU0) from the master base station 1 by wireless communication using channel Ch_JT_CMM, and has received the transmission frame F_{1_trsm} (=PPDU1) from the slave base station 2-1, the wireless device 3 transmits the block Ack to the master base station 1 by wireless communication using channel Ch_JT_CMM.

The master base station 1 then receives the block Ack from the wireless device 3 by wireless communication using channel Ch_JT_CMM, and detects that the wireless device 3 has received the transmission frames F_{mst_trsm} (=PPDU0) and F_{1_trsm} (=PPDU1) transmitted by joint transmission JT between the master base station 1 and the slave base station 2-1.

Therefore, after thar the master base station 1 transmits the " notification of transmission timing" to the slave base station 2-1, distributes the transmission data d_{1_trsm} to the slave base station 2-1 via the backhaul 4, and the master base station 1 and the slave base station 2-1 perform the process of generating the transmission frame, the master base station 1 transmits the transmission frames F_{mst_trsm} (=PPDU0) and F_{1_trsm} (=PPDU1) which are physical layer (PHY layer) frames to the wireless device 3 on the channel Ch_JT_CMM.

Also, when the channel Ch_JT_CMM is used, the frame processing consists of the frame processing shown in FIG. 9 or the frame processing shown in FIG. 16 with the modifications in the same manner as the explanation in FIG. 23.

When the channel Ch_JT_CMM is used, the operation of communication system 10 is performed according to the flowchart which added "the step that the master base station 1 transmitting channel Ch_JT_CMM to the slave base station and the wireless device 3 using channel Ch_JT_CMM" when it is judged that the joint transmission JT is possible ("YES" in step S9) in the flowchart shown in FIGS. 10 and 11.

In addition, when the channel Ch_JT_CMM is used, the operation of communication system 10A is performed according to the flowchart which added "the step that the master base station 1A transmitting channel Ch_JT_CMM to the slave base station and the wireless device 3 using channel Ch_JT_CMM" when it is judged that the joint transmission JT is possible ("YES" in step S9) in the flowchart shown in FIGS. 17 and 18.

FIG. 24 is another schematic diagram of the master base station 1 shown in FIG. 2. The master base station 1 shown in FIG. 2 may be constituted by the master base station 1B shown in FIG. 24.

Referring to FIG. 24, the master base station 1B is configured by replacing the receiving unit 12, the control unit 13, the wireless unit 14, the generating unit 15, the generating unit 16 and the transmitting unit 17 of the master base station 1 shown in FIG. 2 with a receiving circuit 12A, a control circuit 13A, a wireless circuit 14A, a generating circuit 15A, a generating circuit 16A and a transmitting circuit 17A, respectively, and is otherwise the same as the master base station 1 shown in FIG. 2.

The receiving circuit 12A, the control circuit 13A, the wireless circuit 14A, the generating circuit 15A, the generating circuit 16A and the transmitting circuit 17A respectively perform the same operations as the receiving unit 12, the control unit 13, the wireless unit 14, the generating unit 15, the generating unit 16 and the transmitting unit 17 described above.

FIG. 25 is another schematic diagram of the master base station 1A shown in FIG. 13. The master base station 1A shown in FIG. 13 may be constituted by a master base station 1C shown in FIG. 25.

Referring to FIG. 25, the master base station 1C is configured by replacing the receiving unit 12, the control unit 13A, the wireless unit 14, the generating unit 15, the generating unit 16, the transmission unit 17 and the calculation unit 18 of the master base station 1A shown in FIG. 13 with a receiving circuit 12A, a control circuit 13B, a wireless circuit 14A, a generating circuit 15A, a generating circuit 16A, a transmission circuit 17A and a calculation circuit 18A, respectively, and is otherwise the same as the master base station 1A shown in FIG. 13.

The receiving circuit 12A, the control circuit 13B, the wireless circuit 14A, the generating circuit 15A, the generating circuit 16A, the transmitting circuit 17A and the calculation circuit 18A respectively perform the same operations as the receiving unit 12, the control unit 13A, the wireless unit 14, the generating unit 15, the generating unit 16, the transmitting unit 17 and the calculation unit 18 described above.

FIG. 26 is another schematic diagram of the slave base station 2-1 shown in FIG. 3. The slave base station 2-1 shown in FIG. 3 may be constituted by the slave base station 2-1A shown in FIG. 26.

Referring to FIG. 26, the slave base station 2-1A is the same as the slave base station 2-1 shown in FIG. 3, except that the wireless unit 22, receiving unit 23, control unit 24 and generating unit 25 shown in FIG. 3 are replaced with a wireless circuit 22A, a receiving circuit 23A, a control circuit 24A and a generating circuit 25A, respectively.

The wireless circuit 22A, the receiving circuit 23A, the control circuit 24A and the generating circuit 25A perform the same operations as the wireless unit 22, the receiving unit 23, the control unit 24 and the generating unit 25 described above, respectively.

Each of the slave base stations 2-2 to 2-n (or slave base station 2-m) described above has the same configuration as the slave base station 2-1A shown in FIG. 26.

FIG. 27 is another schematic diagram of the wireless device 3 shown in FIG. 4. The wireless device 3 shown in FIG. 4 may be a wireless device 3A shown in FIG. 27.

Referring to FIG. 27, a wireless device 3A is the same as the wireless device 3 shown in FIG. 4, except that the wireless unit 32 and the control unit 33 shown in FIG. 4 are replaced by a wireless circuit 32A and a control circuit 33A, respectively.

The radio circuit 32A and the control circuit 33A execute the same operations as the radio unit 32 and the control unit 33 described above, respectively.

In the above-mentioned embodiment 1, it has been explained that (1) the master base station transmits the notification of the transmission timing to the slave base station via in-band (= via wireless communication using the same channel as the channel when the master base station and each of the m slave base stations transmit data to the wireless device), (2) the master base station distributes the transmission data to the slave base stations via the backhaul in parallel with (1), and (3) the master base station and the slave base station perform the transmission frame generation process in parallel with (1).

In the above-described first embodiment, it has been explained that the above steps (2) and (3) do not have to be executed in parallel with the step (1).

In addition, in the above-mentioned embodiment 2, it has been explained that (1A) the master base station transmits the notification of transmission timing and a padding PD having a length consisting of a padding time to the slave base station via in-band (= via wireless communication using the same channel as the channel when the master base station and each of the m slave base stations transmit data to the wireless device), (2A) the master base station distributes transmission data to the slave base stations via the backhaul in parallel with the transmission of the padding PD in (1A), and (3A) the master base station and the slave base station perform the transmission frame generation process in parallel with the transmission of the padding PD in (1A).

In the above-mentioned second embodiment, it has been explained that the above (2A) and (3A) do not have to be executed in parallel with the transmission of the padding PD in (1A).

As a result, the embodiment 1 and the embodiment 2 have in common the following points: (1) the master base station transmits the notification of the transmission timing to the slave base station via in-band (= via wireless communication using the same channel as the channel used when the master base station and each of the m slave base stations transmit data to the wireless device), (2) the master base station distributes the transmission data to the slave base stations via the backhaul, and (3) the master base station and the slave base station perform the transmission frame generation process.

Therefore, according to the embodiment of the present invention, the communication method is a communication method for transmitting transmission data D_trsm to a wireless device using joint transmission in which a master base station and m (m is an integer satisfying 1≦m≦n) slave base stations out of n (n is an integer equal to or greater than 1) slave base stations jointly transmit transmission data D_trsm to the wireless device by wireless communication in a CSMA/CA system using one channel,
the communication method including:
a first step in which the master base station judges whether or not joint transmission is possible,
a second step in which the master base station calculates m data amounts of the m transmission data to be allocated to the m slave base stations respectively when it is judged in the first step that joint transmission is possible,
a third step in which the master base station transmits to the m slave base stations by wireless communication a notification of transmission timing notifying a timing to transmit a transmission frame to the wireless device after the second step,
a fourth step in which the master base station transmits, after the second step, m pieces of transmission data each having m amounts of data to the m slave base stations by using a backhaul;
a fifth step in which the master base station and each of the m slave base stations perform a transmission frame generation process which is a process of generating a transmission frame based on the data volume after the second step,
a sixth step in which the master base station and the m slave base stations transmit (m+1) transmission frames to the wireless device by joint transmission when it is the transmission timing, and
a seventh step in which the master base station receives from the wireless device a block Ack that is a block of Ack that confirms reception of the frames after the sixth step.

Since the communication method comprises the first to seventh steps, m pieces of transmission data having a data volume of m, respectively, are transmitted to m slave base stations using a backhaul, so that wireless resources are not strained as much as in the case where m pieces of transmission data having a data volume of m, respectively, are transmitted in-band. As a result, it is possible to improve the throughput when the master base station and the m slave base stations transmit transmission frames to the wireless device.

When the channel Ch_JT_CMM is used, the communication method defines a state in which the base station and the wireless device in a wireless LAN can transmit and receive data to each other as being "associated," defines a channel that the base station uses in common with all associated wireless devices as a primary channel, defines a channel that the base station can use together with the primary channel to expand the bandwidth of communication with its associated wireless devices as a secondary channel, and when a channel consisting of "a common part of the 'combination of primary channel and secondary channel' or a part of the widest channel of the common part including the primary channel under the condition that the primary channels of all base stations and wireless device are included" among the master base station, slave base station(s), and wireless device participating in the joint transmission JT is defined as a channel Ch_JT_CMM, a first condition in which a primary channel of the wireless device is the same as a primary channel of the master base station, a second condition in which the secondary channel of the wireless device is within range of the secondary channel of the master base station, a third condition that the primary channels of the m slave base stations are within range of the primary channel or the secondary channel of the wireless device, and a fourth condition that, when the primary channel of the wireless device is different from the primary channels of the m slave base stations, the primary channel of the wireless device is within the range of the secondary channels of the m slave base stations are satisfied, and in the sixth step, the master base station and the m slave base stations use "wireless communication employing CSMA/CA using the channel Ch_JT_CMM" instead of "wireless communication employing CSMA/CA using one channel" and transmit (m+1) transmission frames to the wireless device by joint transmission when transmission timing arrives.

According to an embodiment of the present invention, the communication system transmits transmission data D_trsm to a wireless device using joint transmission in which the master base station and m (m is an integer satisfying 1≦m≦n) slave base stations among n (n is an integer equal to or greater than 1) slave base stations jointly transmit transmission data D_trsm to the wireless device by wireless communication employing CSMA/CA using one channel, comprising of:
a master base station executing a calculation process for calculating m data amounts of the m transmission data to be allocated to the m slave base stations, when it is judged that joint transmission is possible, a first transmission process of transmitting to m slave base stations, via wireless communication, a notification of a transmission timing to notify a timing for transmitting the transmission frame to the wireless device after the calculation process, a second transmission process of transmitting m pieces of transmission data, each having m amounts of data, to the m slave base stations by using a backhaul after the calculation process, and a transmission frame generation process for generating a transmission frame based on the transmission data after the calculation process,
m slave base stations each performing a first receiving process for receiving a notification of a transmission timing from the master base station and a second receiving process for receiving m pieces of transmission data from the master base station using a backhaul, and
a wireless device that receives (m+1) transmission frames transmitted by joint transmission of the master base station and m slave base stations, and transmits a block Ack doing Ack that confirms reception of the frames at once to the master base station,
wherein each of the m slave base stations executes a transmission frame generation process which is a process of generating a transmission frame based on the transmission data received in the second reception process,
when a transmission timing arrives, the master base station and the m slave base stations transmit (m+1) transmission frames to the wireless device by joint transmission, and
the master base station transmits (m+1) transmission frames to the wireless device through joint transmission with the m slave base stations, and then receives a Block Ack from the wireless device.

If the communication system includes the master base station, m slave base stations, and the wireless device, and the master base station transmits m pieces of transmission data having the m data amounts, respectively, to the m slave base stations using the backhaul, wireless resources can be less constrained than when the m pieces of transmission data having the m data amounts, respectively, are transmitted in-band, wireless resources are less congested. As a result, the throughput when the master base station and the m slave base stations transmit transmission frames to the wireless device can be improved.

When the channel Ch_JT_CMM is used, in a communication system, the base station and the wireless device in a wireless LAN are considered to be "associated" when they can transmit and receive data to each other, a channel that the base station uses in common with all wireless devices associated with the base station is defined as a primary channel, and a channel that can be used together with the primary channel by the base station in order to expand the bandwidth of communication with its associated wireless devices is defined as the secondary channel, among the master base station, slave base station(s) and wireless device participating in the joint transmission JT, "under the condition that the primary channels of all base stations and wireless device are included, when a channel consisting of a common part of a "combination of the primary channel and the secondary channel" or a part of the widest channel of the common part including a primary channel is defined as a channel Ch_JT_CMM, a first condition in which a primary channel of the wireless device is the same as a primary channel of the master base station, a second condition in which the secondary channel of the wireless device is within range of the secondary channel of the master base station, a third condition that the primary channels of the m slave base stations are within range of the primary channel or the secondary channel of the wireless device, and a fourth condition that, when the primary channel of the wireless device is different from the primary channels of the m slave base stations, the primary channel of the wireless device is within the range of the secondary channels of the m slave base stations are satisfied,
a communication system may be used in which the master base station and m slave base stations use "wireless communication employing CSMA/CA using the channel Ch_JT_CMM" instead of "wireless communication employing CSMA/CA using one channel" and, when the transmission timing arrives, may transmit (m+1) transmission frames to the wireless device by joint transmission.

In the embodiment of the present invention, the step S9 shown in FIG. 10 or the step S9 shown in FIG. 17 constitutes a "first step" in which the master base station judges whether or not joint transmission is possible.

Furthermore, in an embodiment of the present invention, the step S10 shown in FIG. 10 or the step S10 shown in FIG. 17 constitutes a "second step" in which the master base station calculates m data amounts of the m transmission data to be allocated the m slave base stations, respectively, when it is judged in the first step that the joint transmission is possible.

Furthermore, in an embodiment of the present invention, "(1) the master base station transmits the notification of transmission timing to the slave base station via in-band (= via wireless communication using the same channel as the channel when the master base station and each of the m slave base stations transmit data to the wireless device)" in step S11 shown in FIG. 10 constitutes a "third step" in which, when it is judged in the first step that joint transmission is possible, the master base station transmits the notification of transmission timing informing the timing to transmit the transmission frame to the wireless device to the m slave base stations via wireless communication.

Furthermore, in an embodiment of the present invention, "(2) The master base station distributes transmission data to the slave base stations via the backhaul" in step S11 shown in FIG. 10 constitutes a "fourth step" in which the master base station transmits m pieces of transmission data having m amounts of data, respectively, to m slave base stations using the backhaul when it is judged in the first step that joint transmission is possible.

Furthermore, in an embodiment of the present invention, "(3) The master base station and the slave base station perform a transmission frame generation process" in step S11 shown in FIG. 10 constitutes a "fifth step" in which each of the master base station and the m slave base stations perform a transmission frame generation process which is a process for generating a transmission frame based on the amount of data, when it is judged in the first step that joint transmission is possible.

Furthermore, in an embodiment of the present invention, step S12 in FIG. 11 constitutes a "sixth step" in which the master base station and m slave base stations transmit (m+1) transmission frames to the wireless device by joint transmission when the transmission timing arrives.

Furthermore, in this embodiment of the present invention, the step S15 in FIG. 11 constitutes a "seventh step" in which the master base station receives a block ACK executing by in bulk an ACK that confirms reception of the frame from the wireless device after the sixth step.

Furthermore, in an embodiment of the present invention, "only the master base station transmits the transmission data to the wireless device," in step S16 in FIG. 11 or FIG. 18 constitutes an "eighth step" in which, when it is judged in the first step that joint transmission is not possible, only the master base station transmits a transmission frame including the transmission data D_trsm to the wireless device by wireless communication, instead of steps two to six.

Furthermore, in an embodiment of the present invention, step S10 shown in FIG. 10 or step S10 shown in FIG. 17 constitutes a "calculation process" that calculates m data amounts of m transmission data to be allocated to m slave base stations, respectively, when it is judged that joint transmission is possible.

Furthermore, in an embodiment of the present invention, "(1) The master base station transmits the notification of transmission timing to the slave base station via in-band (= via wireless communication using the same channel as the channel when the master base station and each of the m slave base stations transmit data to the wireless device)" in step S11 shown in FIG. 10 constitutes a "first transmission process" in which, after the calculation process, transmits to the m slave base stations via wireless communication the notification of transmission timing informing them of the timing to transmit the transmission frame to the wireless device.

Furthermore, in an embodiment of the present invention, "(2) The master base station distributes transmission data to the slave base stations via the backhaul" in step S11 shown in FIG. 10 constitutes a "second transmission process" in which, after the calculation process, m pieces of transmission data having m amounts of data, respectively, are transmitted to m slave base stations using the backhaul, respectively.

Furthermore, in an embodiment of the present invention, in FIG. 9, the slave base stations 2-1 and 2-2 receiving notification of the transmission timing from the master base station constitutes a "first reception process" in which each of the m slave base stations receives notification of the transmission timing from the master base station.

Furthermore, in this embodiment of the present invention, in FIG. 9, the reception of distributed transmission data by the slave base stations 2-1 and 2-2 constitutes a "second reception process" in which m pieces of transmission data are received from the master base station using the backhaul.

The embodiments disclosed herein are to be considered illustrative in all respects and not restrictive. The scope of the invention is defined by the appended claims, not by the foregoing description of the embodiments, and it is intended that all modifications fall within the scope of claims and their equivalents.

### [Industrial Applicability]

The present invention applies to a communication method and a communication system.

## Claims

1. A communication method transmitting a transmission data D_trsm to a wireless device by using a joint transmission that a master base station and m (m is an integer satisfying 1≦m≦n) slave base stations among n (n is an integer equal to or greater than 1) slave base stations jointly transmit the transmission data D_trsm to the wireless device by wireless communication employing CSMA/CA using one channel,
the communication method comprising:
a first step in which the master base station judges whether or not the joint transmission is possible,
a second step in which the master base station calculates m data amounts of the m transmission data to be allocated to the m slave base stations, respectively, when the master base station determines in the first step that the joint transmission is possible,
a third step in which the master base station transmits, after the second step, a notification of a transmission timing that notifies a timing for transmitting a transmission frame to the wireless device to the m slave base stations by the wireless communication,
a fourth step in which the master base station transmits, after the second step, m pieces of transmission data having the m data amounts, respectively, to m slave base stations by using a backhaul,
a fifth step in which each of the master base station and the m slave base stations executes, after the second step, a transmission frame generation process that is process generating a transmission frame based on the amount of data,
a sixth step in which the master base station and the m slave base stations transmit the (m+1) transmission frames to the wireless device by the joint transmission when the transmission timing arrives, and
a seventh step in which the master base station receives, from the wireless device, a block Ack that collectively performs an Ack to confirm reception of the frame after the sixth step.

2. The communication method according to claim 1, wherein the fourth step and the fifth step are performed in parallel with the third step.

3. The communication method according to claim 1, wherein the master base station, in the second step, calculates the m pieces of data amounts by executing for all of the m slave base stations calculating the data amount to be allocated to the slave base station in which the data amount is to be calculated, so as to being proportional to a wireless transmission speed of the transmission data at the slave base station for which a data amount is to be calculated and being inversely proportional to s sum of a wireless transmission speed of the transmission data at the master base station and m wireless transmission speeds at the m slave base stations.

4. The communication method according to claim 1, wherein the master base station, in the third step, transmits padding having a length equal to a padding time and the notification of transmission timing to the m slave base stations by wireless communication.

5. The communication method according to claim 4, wherein the padding time is the maximum padding time among m padding times in the m slave base stations.

6. The communication method according to claim 5, wherein the master base station, in the third step, calculates the m pieces of padding times by executing for all of the m slave base stations calculating a padding time for the one slave base station by using a transmission time in when transmitting to the one slave base station transmission data having a data amount allocated to the one slave base station by backhaul, a generation processing time of a transmission frame in the one slave base station, a transmission time in when transmitting the notification of the transmission timing to the one slave base station, and a SIFS time in CSMA/CA.

7. The communication method according to claim 6, wherein the master base station, in the third step, calculates a padding time for the one slave base station by subtracting the transmission time of the notification of the transmission timing and the SIFS time from the sum of the transmission time and the generation processing time of the transmission frame.

8. The communication method according to claim 1, wherein the m slave base stations generate m transmission frames which are frames in physical layer and frames to be transmitted to the wireless device in the transmission frame generation process in the fifth step based on the m pieces of transmission data that the master base station transmitted the m pieces of transmission data in the fourth step.

9. The communication method according to claim 1, wherein the communication method further comprises an eighth step in which only the master base station transmits a transmission frame including the transmission data D_trsm to the wireless device by the wireless communication instead of the second step to the sixth step when it is judged in the first step that the joint transmission is not possible.

10. The communication method according to claim 1, wherein when a state that a base station and a wireless device in a wireless LAN can transmit and receive data to each other is defined as "associated", a channel that the base station uses in common with all associated wireless devices is defined as a primary channel, a channel that the base station can use together with the primary channel to expand a bandwidth of communication with its associated wireless device is defined as a secondary channel, a channel consisting of "a common part of the 'combination of the primary channel and the secondary channel' or a part of the widest channel of the common part including the primary channel, under the condition that the primary channels of all base stations and wireless device are included" among the master base station, slave base station(s), and wireless device participating in the joint transmission JT is defined as a channel Ch_JT_CMM,
a first condition in which a primary channel of the wireless device is the same as a primary channel of the master base station, a second condition that a secondary channel of the wireless device is within a range of a secondary channel of the master base station, a third condition in which the primary channels of the m slave base stations are within a range of the primary channel or a secondary channel of the wireless device, and a fourth condition that, when the primary channel of the wireless device is different from the primary channels of the m slave base stations, the primary channel of the wireless device is within the range of the secondary channels of the m slave base stations are satisfied,
the master base station and the m slave base stations, in the sixth step, use "wireless communication employing CSMA/CA using the channel Ch_JT_CMM" instead of "wireless communication employing CSMA/CA using the one channel" and transmit the (m+1) transmission frames to the wireless device by the joint transmission when the transmission timing arrives.

11. A communication system transmitting a transmission data D_trsm to a wireless device by using a joint transmission that a master base station and m (m is an integer satisfying 1≦m≦n) slave base stations among n (n is an integer equal to or greater than 1) slave base stations jointly transmit the transmission data D_trsm to the wireless device by wireless communication employing CSMA/CA using one channel,
the communication system comprising:
a master base station executing a calculation process calculating m data amounts of the m transmission data to be allocated to the m slave base stations, respectively, a first transmission process of transmitting, via the wireless communication, to the m slave base stations a notification of a transmission timing for notifying a timing for transmitting a transmission frame to the wireless device after the calculation process, a second transmission process of transmitting m pieces of transmission data having the m data amounts, respectively, to the m slave base stations by using a backhaul after the calculation process, and a transmission frame generation process for generating a transmission frame based on the transmission data of the master base station after the calculation process,
m slave base stations each executing a first reception process of receiving a notification of the transmission timing from the master base station and a second reception process of receiving the m transmission data from the master base station using the backhaul, and
a wireless device receiving the (m+1) transmission frames transmitted by the joint transmission between the master base station and the m slave base stations, and transmitting to the master base station a block Ack to collectively execute an Ack to confirm reception of the frames,
wherein each of the m slave base stations executes a transmission frame generation process which is a process of generating a transmission frame based on the transmission data received in the second reception process,
the master base station and the m slave base stations transmit the (m+1) transmission frames to the wireless device by the joint transmission when the transmission timing arrives, and
the master base station transmits the (m+1) transmission frames to the wireless device by the joint transmission with the m slave base stations, and then receives the block Ack from the wireless device.

12. The communication system according to claim 11, wherein the master base station executes the second transmission process and the process of generating the transmission frame in parallel with the first transmission process, and
each of the m slave base stations executes the generation process of the transmission frame in parallel with the first transmission process.

13. The communication system according to claim 11, wherein the master base station calculates, in the calculation process, an amount of data to be allocated to the slave base station for which the amount of data is to be calculated so that the amount of data is proportional to the wireless transmission speed of the transmission data at the slave base station for which the amount of data is to be calculated and inversely proportional to the sum of the wireless transmission rate of the transmission data at the master base station and the m wireless transmission speeds at the m slave base stations, for all of the m slave base stations, thereby calculating the m amounts of data.

14. The communication system according to claim 11, wherein the master base station, in the first transmission process, transmits padding having a length equal to a padding time and the notification of transmission timing to the m slave base stations by wireless communication.

15. The communication system according to claim 14, wherein the padding time is the maximum padding time among the m padding times of the m slave base stations.

16. The communication system according to claim 15, wherein the master base station, in the first transmission process, calculates the m pieces of padding times by executing for all of the m slave base stations calculating the padding time of the one slave base station by using a transmission time when transmitting transmission data having a data amount allocated to one of the slave base stations to the one of the slave base stations by a backhaul, the generating process time of a transmission frame in the one slave base station, a transmission time when the notification of the transmission timing is transmitted to the one slave base station and SIFS time in CSMA/CA.

17. The communication system according to claim 16, wherein the master base station ,in the first transmission process, calculates a padding time for the one slave base station by subtracting the transmission time of the notification of the transmission timing and the SIFS time from an addition result of the transmission time and the generation processing time of the transmission frame.

18. The communication system according to claim 11, wherein the m slave base stations generate, in the transmission frame generation process, m transmission frames to be transmitted to the wireless device, the m transmission frames being made up of physical layer frames, based on each of the m pieces of transmission data transmitted by the master base station in the second transmission process.

19. The communication system according to claim 11, wherein when the master base station judges that the joint transmission is impossible, only the master base station transmits a transmission frame including the transmission data D_trsm to the wireless device by the wireless communication, in replace of the first transmission process, the calculation process, the second transmission process, the generation process of transmission frame and transmitting the (m+1) transmission frames by the joint transmission with the m slave base stations to the wireless device.

20. The communication system according to claim 11, wherein a state where a base station and a wireless device in a wireless LAN can transmit and receive data to each other is defined as" associated ", a channel that the base station uses in common with all associated wireless devices is defined as a primary channel, a channel that the base station can use together with the primary channel to expand a bandwidth of communication with its associated wireless device is defined as a secondary channel, among the master base station, slave base station(s) and wireless device participating in the joint transmission JT, "under the condition that the primary channels of all base stations and wireless device are included, and when a channel consisting of a common part of "combination of the primary channel and the secondary channel" or a part of the widest channel of the common part including a primary channel is defined as a channel Ch_JT_CMM,
satisfy a first condition in which a primary channel of the wireless device is the same as a primary channel of the master base station, a second condition that a secondary channel of the wireless device is within a range of a secondary channel of the master base station, a third condition that the primary channels of the m slave base stations are within a range of a primary channel or a secondary channel of the wireless device, and a fourth condition, when the primary channel of the wireless device is different from the primary channels of the m slave base stations, the primary channel of the wireless device is within the range of the secondary channels of the m slave base stations,
the master base station and the m slave base stations transmit the (m+1) transmission frames to the wireless device by the joint transmission at the transmission timing by using "wireless communication employing CSMA/CA using the channel Ch_JT_CMM" instead of "wireless communication employing CSMA/CA using the one channel".
